(19) Europäisches Patentamt
European Patent Office
Office européen des brevets

(11) **EP 4 742 153 A1**

(12) **EUROPEAN PATENT APPLICATION**

(43) Date of publication:
**13.05.2026 Bulletin 2026/20**

(21) Application number: **24211832.1**

(22) Date of filing: **08.11.2024**

(51) International Patent Classification (IPC):
**G06T 7/11** *(2017.01)*  **G06T 7/162** *(2017.01)*

(52) Cooperative Patent Classification (CPC):
**G06T 7/11; G06T 7/162;** G06T 2207/10056;
G06T 2207/20072; G06T 2207/20081;
G06T 2207/20084; G06T 2207/30024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Sartorius Stedim Data Analytics AB
903 33 Umeå (SE)**
• **Deutsches Forschungszentrum Für Künstliche
Intelligenz GmbH (DFKI)
67663 Kaiserslautern (DE)**

(72) Inventors:
• **LESMES LEON, Duway Nicolas
67663 Kaiserslautern (DE)**
• **AHMED, Sheraz
67663 Kaiserslautern (DE)**
• **LOVELL, Gillian
Royston, SG8 5WY (GB)**
• **CAROPRESE, Maria
Royston, SG8 5WY (GB)**

(74) Representative: **Mewburn Ellis LLP
Aurora Building
Counterslip
Bristol BS1 6BX (GB)**

(54) **METHODS AND SYSTEMS FOR SYNTHESIZING ANNOTATED CELL MICROSCOPY IMAGES**

(57) Methods of synthesizing annotated cell microscopy images are provided, comprising: inputting a random noise vector into a deep learning model trained using real cell microscopy images and corresponding greyscale segmentation masks, to generate synthetic cell microscopy images and corresponding greyscale segmentation masks. Related methods, products and systems are also described.

Fig. 6

**Description**

*Field of the Disclosure*

The present invention relates to methods and systems for synthesizing annotated cell microscopy images, particularly using generative artificial intelligence (GenAI) models. Related methods, products, and systems are also described.

*Background*

Cell microscopy enables researchers and biologists to observe the cells that are invisible to the naked eye. The study of cells resulted in the most significant progress in biology and medicine, leading to the understanding of mechanisms that are essential to diagnosing and treating health affections. The diverse range of microscopy techniques is tailored to highlight specific features of cells, enabling complementary studies to be performed. Beyond optical microscopy, techniques exist like fluorescence microscopy to highlight specific organelles, electron microscopy to visualize smaller subcellular structures that are not visible with traditional approaches, or techniques using wavelengths out of the visible spectrum.

Despite the broad range of imaging techniques, cell microscopy faces two limiting factors that prevent its progress, namely data acquisition, and processing. Data acquisition is a complex task, considering that cells require specific environmental conditions to persist through time, increasing the sample preservation costs. The cells of interest may represent a rare or highly specialized phenotype that is difficult and expensive to produce, and therefore procedures such as fluorescence labeling may present a higher risk of perturbing the sample. Certain preparation procedures, such as staining intracellular components, require the samples to be fixed and often permeabilized before visualization, preventing further study using other techniques.

Fortunately, the rise of deep learning (DL) provides computer vision alternatives that overcome several challenges in cell microscopy. Generative artificial intelligence (GenAI) is the domain of AI focused on producing synthetic realistic samples, including, text, audio, video, or images. The primary goal of GenAI is to learn a probability distribution that closely mirrors the target data's distribution, allowing it to later sample from this distribution and generate new realistic data. Variational autoencoders (VAEs) (Kingma and Welling, 2014), generative adversarial networks (GANs) (Goodfellow et al., 2014), and Diffusion models (Nichol et al., 2021) are the three pillars of image generation, each of which has different advantages and drawbacks. There is extensive research on the potential of GenAI to produce synthetic cell microscopy images (Lesmes-Leon et al., 2023).

However, traditional GenAI is aimed at producing unannotated data. Therefore, synthetic images still require expensive manual or computational processing to be annotated. Traditionally, specialized experts performed manual annotations, a labor-intensive and error-prone task. Alternatively, deep learning models have been specifically trained for these tasks, significantly speeding up image processing. More specifically, instance segmentation is the most common annotation technique, where a label is assigned to each pixel on an image to differentiate the present individual objects (Sharma et al., 2022).

A regular annotated data generation pipeline is composed of two stages, with a model in charge of the image generation, and a second model in charge of the annotation. There are also alternatives where the annotations are first created, and the generation is conditioned on such annotations (Han et al., 2018). Both approaches rely on two models and therefore are associated with significant time, cost, and data requirements.

Therefore, there remains a need in the art for improved methods and systems for synthesizing annotated cell microscopy images.

*Summary of the Disclosure*

The present inventors have recognised that a problem associated with current approaches to generate annotated cell microscopy images is that they use a two-step process with a first model in charge of image generation and a second model in charge of annotation of generated images. The present inventors recognized that a promising approach to tackle this problem is based on the hypothesis that learning to produce realistic images must indirectly teach the models features that are highly related to their future annotations. Object sizes, shapes, distribution, and location are all essential features for both realistic images and faithful annotations. ISING-GAN (Dimitrakopoulos et al., 2020) is a GAN architecture with sibling branches to produce cell microscopy images and binary masks simultaneously, but has no capacity to differentiate overlapping objects due to its use of a binary mask. Indeed, binary masks can be considered as segmentation mask annotations because the pixel values (limited to 0 or 1) differentiate classes but not instances, i.e. it is not possible to differentiate two objects of the same class that overlap with each other. Devan et al. (Shaga Devan et al., 2021) trained a GAN to produce labeled herpesvirus images, in which specific objects of interest (virus in this case) are annotated. This approach does not annotate all pixels in the image, instead focusing exclusively on the annotation of specific objects of interest, thereby producing a partial segmentation. This is not suitable for complete instance segmentation as would be used in the context of segmenting cells. Outside the cell microscopy domain, Labels4free (Abdal et al., 2021) is an approach that uses features from a pre-trained generative model to produce binary masks, and SatSynth (Toker et al., 2024) a Diffusion model trained to produce both images and semantic segmentation masks simultaneously without any additional training. To the best of the inventors' knowledge, no method exists that generates both images and instance segmentation masks simultaneously for cell microscopy imaging. As explained above, semantic segmentation and instance segmentation produce fundamentally different outputs in contexts in which objects of the same class may overlap, as is the case with cell and tissue culture images. The inventors therefore created a pipeline where artificial images of cells and their corresponding annotations are simultaneously generated. This method rapidly provides data which can augment model training and lead to more accurate cell segmentation. The present inventors recognized that the use of GenAI to produce segmented realistic images without additional networks is made particularly challenging because cell microscopy imaging typically contains densely populated images and repetitive objects. This makes binary and semantic segmentation insufficient for data analysis. Thus, the present inventors set out to develop an approach that produces instance segmentation annotations rather than binary/semantic segmentations, and which is able to identify and differentiate overlapping objects. The present inventors designed a solution to this problem in the form of a single GenAI model trained to generate both synthetic cell microscopy images and associated segmentation masks simultaneously, using a new greyscale segmentation mask approach that deals with the problem of overlapping objects. Indeed, in order to include annotations in the generative process, a first step is to create a segmentation mask for training data which can be interpreted by the model. The inventors designed greyscale masks as a solution to this, which use a greyscale representation of instance segmentation that differentiate overlapping objects by maximizing the contrast of their labels. In the examples below they demonstrate the use of an architecture specifically adapted from Style-GAN2 (Karras et al. 2020), a high-capacity GAN architecture that has been extensively tested with both benchmarks and cell microscopy datasets (Dee et al. 2023; Mascolini et al. 2022). They show that generative models can be trained to produce annotated data without the significant additional efforts associated with prior art two-step processes.

Thus, according to a first aspect, the disclosure provides a computer-implemented method of generating segmented cell microscopy images, the method comprising: providing a random noise vector as input to a deep learning model that has been trained to take as input a random noise vector and produce as output a cell microscopy image and a corresponding segmentation mask, wherein the deep learning model has been trained using training data comprising a plurality of pairs of real cell microscopy images and corresponding greyscale segmentation masks, wherein a greyscale segmentation mask is a mask where each pixel of each segmented object is assigned a pixel value selected for the segmented object from a predetermined set of pixel values, wherein the selected pixel values are such that no two overlapping segmented objects are assigned the same predetermined pixel value, and the number of pixel values in the predetermined set of pixel values is the smallest number that can be used while fulfilling the condition that no two overlapping segmented objects are assigned the same predetermined pixel value.

"Real" cell microscopy images may also be referred to as "measured" or "experimentally acquired" cell microscopy images. Thus, the deep learning model may have been trained to generate pairs of cell microscopy images and corresponding greyscale masks.

In some embodiments, the deep learning model is configured to jointly generate both the cell microscopy image and a corresponding segmentation mask, and/or the deep learning model is configured to generate a single output comprising concatenated values representing the cell microscopy image and the corresponding segmentation mask. In some embodiments, the deep learning model is a generator of a generative adversarial network. Alternatively, the deep learning model may be a denoising network of a diffusion model. In some embodiments, the deep learning model is a model derived from the styleGAN architecture. In embodiments, the deep learning model is a generator of a generative adversarial network trained to perform conditional generation. In embodiments, the deep learning model is a model derived from the StyleGAN architecture in which each tRGB block in the generator has been replaced by a 2D modulated convolutional layer. In embodiments, the deep learning model is a generator of a generative adversarial network that uses a classifier network to condition image generation. In some embodiments, the deep learning model is a conditional generative model, wherein the deep learning model further takes as input one or more class labels and wherein the training data comprises a plurality of pairs of real cell microscopy images and corresponding one or more greyscale segmentation masks each associated with one or more class labels. In embodiments, each greyscale segmentation mask is associated with a single class label. In embodiments, a class label is a label that identifies one or more of: the type(s) of cells, cellular structures or tissues in the sample from which a cell microscopy image has been obtained, metadata associated with the sample processing that has been applied to the sample prior to imaging, and metadata associated with the imaging process used to obtain the cell microscopy image.

In embodiments, a cell microscopy image is a 2D microscopy image. In embodiments, a cell microscopy image is an optical microscopy image. An optical microscopy image may be a brightfield or phase contrast microscopy image. In embodiments, a cell microscopy image is a fluorescence image. In some embodiments, a segmentation mask identifies the location of a plurality of segmented cellular structures, wherein cellular structures are selected from: cells, organelles, or any other localized subcellular structure that can be visualized using cell microscopy imaging.

In some embodiments, a greyscale segmentation mask for each training image has been obtained from a segmentation mask identifying the location of each of a plurality of segmented objects by: creating a directed graph where each segmented object is represented as a node in the graph, and two nodes are connected by an edge if the segmented objects overlap with each other; and assigning a selected pixel value to each node of the directed graph from a predetermined set of pixel values, wherein the selected pixel value is such that no two connected nodes in the graph are assigned the same predetermined pixel value, and the number of pixel values in the predetermined set of pixel values is the smallest number that can be used while fulfilling the condition that no two connected nodes are assigned the same predetermined pixel value. In embodiments, the directed graph is a weighted directed graph, where the weight of each edge in the graph is proportional to the degree of overlap between the segmented objects associated with the nodes connected by the edge. In embodiments, the directed graph is a weighted directed graph wherein the weight of an edge u -> v between node u as a source node and node v as a target node was calculated as the area percentage of the segmented object associated with node u that is covered by the segmented object associated with node v. In embodiments, this area percentage was estimated by dividing the intersection of the area of the segmented object associated with node u and the area of the segmented object associated with node v over the total area of the segmented object associated with node u.

In embodiments, the step of assigning a selected pixel value to each node of the directed graph from a predetermined set of pixel values was performed by traversing connected subgraphs of the graph, and selecting for each visited node (e.g. each node that has not yet been visited) a label from a queue of labels, ensuring that connected nodes are not assigned the same label, wherein each label in the queue of labels is associated with a predetermined pixel value. Traversing connected subgraphs of the graph may be performed using a modified flood fill or breadth-first-search algorithm. In embodiments, a newly visited node is assigned the label that is the earliest label in the queue of labels that differs from the labels already assigned to nodes connected to the newly visited node. In embodiments, the pixel values associated with the labels in the queue were selected from a predetermined set of pixel values common across all images of a set of training cell microscopy images, the queue of labels was common across all images of a set of training cell microscopy images, and the order of the predetermined set of pixel values associated with each label in the queue was randomly shuffled for each training cell microscopy image or each connected subgraph in each training cell microscopy image.

In embodiments, the directed graph has been filtered by removing all nodes corresponding to objects that have a degree of overlap above a predetermined threshold, or wherein the directed graph is a weighted directed graph, where the weight of each edge in the graph is proportional to the degree of overlap between the segmented objects associated with the nodes connected by the edge and the graph has been filtered by removing all nodes that have an incoming edge with a weight above a predetermined threshold. In embodiments, the set of predetermined pixels values are selected as boundaries of equal size subranges of a total range corresponding to the range of the greyscale channel, the number of subranges corresponding to the number of predetermined pixel values in the set. In some embodiments, the directed graph has been filtered by removing all nodes that are assigned a label that is at or above a predetermined rank in the queue of labels. In embodiments, the deep learning model has been trained to take as input a random noise vector and produce as output a cell microscopy image and a corresponding segmentation mask in which pixels are assigned continuous values and the method further comprises applying range filtering to the segmentation mask produce by the deep learning model to select pixel values within respective predetermined ranges associated with each of the respective predetermined pixel values, wherein pixels within a predetermined range are considered to be associated with the predetermined pixel value that is associated with the predetermined range. In embodiments, the method further comprises obtaining a processed segmentation mask in which each of the selected pixels in the segmentation mask output by the deep learning model is associated with the predetermined pixel value of the predetermined range associated with the pixel value output by the deep leaning model. The method may further comprise removing from the processed segmentation mask any segmented object (wherein a segmented object is a continuous area associated with a single pixel value) that has a size outside of a predetermined range. The predetermined range may be derived from an expected size of the segmented objects, such as e.g. based on predetermined percentiles of a size distribution of the segmented objects in the training data.

Methods according to the present aspect may comprise training the deep learning model and/or obtaining the training dataset by obtaining a greyscale segmentation mask for each of a plurality of training cell microscopy images.

Also described herein according to a second aspect is a computer-implemented method of training a machine learning model for segmentation of cellular structures in cell microscopy images, the method comprising: obtaining synthetic images using the method of any embodiment of the first aspect; and training a segmentation machine learning model using a training data set comprising the obtained synthetic images.

Also described herein according to a third aspect is a computer-implemented method of training a deep learning model to generate segmented cell microscopy images, the method comprising: obtaining a training dataset comprising a plurality of pairs of real cell microscopy images and corresponding greyscale segmentation masks, wherein a greyscale segmentation mask is a mask where each pixel of each segmented object is assigned a pixel value selected for the segmented object from a predetermined set of pixel values, wherein the selected pixel values are such that no two overlapping segmented objects are assigned the same predetermined pixel value, and the number of pixel values in the predetermined set of pixel values is the smallest number that can be used while fulfilling the condition that no two overlapping segmented objects are assigned the same predetermined pixel value; and training a deep learning model, using said training dataset to take as input a random noise vector and produce as output a cell microscopy image and a corresponding segmentation mask. Methods according to the present aspect may have any of the features described in relation to the first aspect.

According to a fourth aspect, there is provided a method comprising any of the steps of the first aspect, and any of the steps of the third aspect. The methods of the present aspect may also comprise any of the steps of the second aspect.

According to a fifth aspect, there is provided a system including: at least one processor; and at least one non-transitory computer readable medium containing instructions that, when executed by the at least one processor, cause the at least one processor to implement any of the methods described herein. For example, the system may be configured to implement the methods of any embodiment of any of the first, second, third and/or fourth aspects.

According to a sixth aspect, there is provided a non-transitory computer readable medium comprising instructions that, when executed by at least one processor, cause the at least one processor to perform any of the methods described herein. For example, the instructions may cause the at least one processor to implement the methods of any embodiment of any of the first, second, third and/or fourth aspects.

According to a seventh aspect, there is provided a computer program comprising code which, when the code is executed on a computer, causes the computer to perform any of the methods described herein. For example, the code may cause the computer to implement the methods of any embodiment of any of the first, second, third and/or fourth aspects.

The invention includes the combination of the aspects and preferred features described except where such a combination is clearly impermissible or expressly avoided.

## Summary of the Figures

Embodiments and experiments illustrating the principles of the invention will now be discussed with reference to the accompanying figures in which:

Figure 1 shows flow diagrams illustrating schematically methods of the disclosure.

Figure 1A is a flow diagram showing, in schematic form, a method of generating segmented cell microscopy images as described herein, and a method of training a machine learning model for cellular structure segmentation in cell microscopy images as described herein.

Figure 1B is a flow diagram showing, in schematic form, a method of training a deep learning model for generating segmented cell microscopy images.

Figure 2 shows an embodiment of a system for performing methods described herein.

Figure 3 presents pseudocode used for greyscale mask generation in examples of the disclosure.

Figure 4 depicts the architecture of the first two blocks of a generator model used in examples of the disclosure illustrated the prior art StyleGAN2 generator and the modifications applied to the StyleGAN2 generator (dashed red box). On the left, original input/output skips configuration, and on the right a detailed description of the present implementation. Style, synthesis blocks and modulated convolutions follow the same implementation as in StyleGAN2 original publication. The notation presented here follows the StyleGAN2 original publication (Karras et al., 2020).

Figure 5 depicts the full architecture of the modified generator used in the present implementation.

Figure 6 shows examples of greyscale segmentation masks generated using exemplary methods of the disclosure. The greyscale masks store effectively the instance segmentation annotations. The first row shows a LIVECell image with its respective mask. The second row shows a TissueNet sample.

Figure 7 is a clustered bar chart visualising the number of cells removed at each cell overlap threshold, per number of cell labels. The data show that 90% and 70% thresholding remove 2% and 3% of cells respectively, compared to the no thresholding approach.

**Figure 8A** shows a real greyscale mask pixel distribution in the LIVE Cell dataset with a label cap of the first five labels only (with cells labelled '5' and '6' removed - total 196 cells - after first removing cells with more than 70% of their areas covered by neighbours). The graph shows five clear peaks representing pixel values for five greyscale labels assigned to cells in the data using methods described herein.

**Figure 8B** shows a greyscale mask pixel distribution of data generated as described herein with five cell labels (model trained using the data with the distribution on Fig. 8A). The distribution for the model outputs corresponds poorly to the real distribution shown in Fig. 8A.

**Figure 8C** shows the greyscale mask pixel distribution of data generated as described herein with four cell labels. The model shows three of the four peaks that would be expected to be seen in the real data, with the peaks being more clearly defined compared to the five cell label experiment (Fig. 8B).

**Figure 9** shows real and generated images with their respective segmentation masks after post-processing.

**Fig. 9A** shows real and generated images from LIVE Cell dataset samples from SkBr3, BT-474, A172, and MCF7 cell types. **Fig. 9B** shows real and generated images from TissueNet dataset samples from tonsil, oesophagus, colon, and pancreas tissues.

**Figure 10** shows examples of GAN generator image artifacts. LIVECell (first row) image artifacts comprise repetitive patterns and blurred edges depending on the cell type, while TissueNet (second row) presents an uncommon distribution of the blue channel.

**Figure 11** shows an example of contour extraction from a 256-bit greyscale mask.

**Figure 11A** shows the greyscale mask obtained for an image to segment shown on Figure 11B, and the corresponding single pixel band masks.
**Figure 11B** shows the image to segment and the single pixel band masks of Figure 11A overlaid on the image.

**Figure 12** shows examples of GAN generator segmentation mask artifacts. Segmentation masks artifacts include cell segmentation fragmentation in LIVECell (first row) and object merging into single object in TissueNet (second row).

### *Detailed Description of the Disclosure*

Aspects and embodiments of the present invention will now be discussed with reference to the accompanying figures. Further aspects and embodiments will be apparent to those skilled in the art. All documents mentioned in this text are incorporated herein by reference.

The present disclosure provides new methods for generating segmented cell microscopy images using deep learning models trained with training data comprising cell microscopy images and corresponding greyscale segmentation masks.

In describing the present invention, the following terms will be employed, and are intended to be defined as indicated below.

The systems and method described herein can be implemented in a computer system, in addition to the structural components and user interactions described. As used herein, the term "computer system" includes the hardware, software and data storage devices for embodying a system and carrying out a method according to the described embodiments. For example, a computer system can comprise one or more central processing units (CPU) and/or graphics processing units (GPU), input means, output means and data storage, which can be embodied as one or more connected computing devices. Preferably the computer system has a display or comprises a computing device that has a display to provide a visual output display. The data storage can comprise RAM, disk drives, solid-state disks or other computer readable media. The computer system can comprise a plurality of computing devices connected by a network and able to communicate with each other over that network. It is explicitly envisaged that computer system can consist of or comprise a cloud computer.

The methods described herein are computer implemented unless context indicates otherwise. Indeed, the features of the data associated with cell microscopy images (including e.g. pixel value and segmentation masks) and the complexity of the machine learning models necessary to generate such images are such that the methods described herein are far beyond the capability of the human brain and cannot be performed as a mental act. The methods described herein can be provided as computer programs or as computer program products or computer readable media carrying a computer program which is arranged, when run on a computer, to perform the method(s) described herein. As used herein, the term "computer readable media" includes, without limitation, any non-transitory medium or media which can be read and accessed directly by a computer or computer system. The media can include, but are not limited to, magnetic storage media such as floppy discs, hard disc storage media, magnetic tape; optical storage media such as optical discs or CD-ROMs; electrical storage media such as memory, including RAM, ROM and flash memory; hybrids and combinations of the above such as magnetic/optical storage media.

The terms "cell microscopy image data", "cell microscopy images", "image data" and "images" are used interchangeably unless otherwise specified. The term "cell microscopy image" refers to an image of a sample that has been acquired using any 2D microscopy technology suitable for visualising cells or cellular structures in a sample. This may be selected from optical microscopy technologies (e.g. brightfield microscopy, phase contrast microscopy), fluorescence microscopy (e.g. for autofluorescence imaging or imaging of stained samples such as e.g. using immunohistochemistry, including confocal microscopy), and Raman microscopy. Cell microscopy images as used herein can be single channel (e.g. greyscale) or multichannel (e.g. RGB) images. For the purpose of analysis by deep learning models as described herein, images (whether cell microscopy images or corresponding segmentation masks) are represented as data vectors comprising, for each pixel, an intensity value for each of one or more channels that make up the image. The term "images" is used interchangeably to refer to the 2D images as would be displayed to a user, and to the corresponding data vector.

The present disclosure provides methods for generating segmented cell microscopy images of samples. The terms "sample" refers to any sample comprising cells, that can be analysed by microscopy imaging. The sample may be a sample comprising cells (e.g. cells in 2D or 3D culture), tissues, multicellular structures (e.g. organoids or spheroids). The sample may be a sample of cultured cells, tissue or multicellular structures in a cell culture environment. The cell culture environment may include a 2D or 3D cell culture environment. The term "cell culture" is used generally to refer to an environment in which cells (either isolated cells, tissues or multicellular cultures) can be maintained alive in an *in vitro* environment. The sample may be a primary sample (a sample directly obtained from a subject, including but not limited to a fixed tissue sample obtained from a subject, i.e. a histopathology sample) or a sample of cells, multicellular structures or tissues obtained from one or more cell lines in culture. The sample may be a sample comprising a plurality of cells from the same cell type or cell line. Alternatively, the sample may comprise a plurality of cell types or cell lines. For example, a sample may be a sample comprising cells from a cell type selected from: A172, BT-474. BV-2, Huh7, MCF7, SH-SY5Y, SkBr3, and SK-OV-3. The sample may be a sample comprising tissue from a single tissue type. A tissue may be a disease tissue or a healthy tissue or a combination thereof. The sample may be a sample that has been stained with one or more stains (also referred to interchangeably as "dyes" or "labels"). Any stain usable for cellular structure imaging may be used, including e.g. nuclear stains (hematoxylin, DAPI, etc.), membrane stains (e.g. E-cadherin fluorescent stain), cytoplasm stains or labels (e.g. pan-keration stains, eosin, etc.), mitochondrial stains (e.g. MitoTracker), cell type specific stains, etc.

The terms "synthetic cell microscopy image" and "generated cell microscopy image" are used interchangeably to refer to a cell microscopy image generated using the methods described herein. A synthetic cell microscopy image as used herein is a segmented synthetic cell microscopy image. A segmented synthetic cell microscopy image comprises a first synthetic image that is a synthesised equivalent of cell microscopy images acquired using a predetermined microscopy technology, and a second synthetic image that is a segmentation mask associated with the first synthetic image.

The present disclosure provides methods for generating pairs of cell microscopy images and corresponding segmentation images. The term "segmentation image", "segmentation mask", "segmentation map", "segmentation information", "cellular structure segmentation", and "annotations" are used herein interchangeably to refer to information that identifies the location of objects of interest (segmented objects). Segmented objects may also be referred to as "instances" or "segmented instances". The segmented objects are cellular structures, which can be cells or parts thereof, such as organelles (e.g. nuclei, mitochondria, ribosomes, endoplasmic reticulii, chloroplasts, exosomes, etc.), or any other localised structures. A segmentation mask can identify the location of objects by associating a first predetermined pixel value to all pixels that are not part of segmented objects (also referred to as "background pixels), and one or more second (and optionally further) predetermined pixel value(s) to all pixels that are part of segmented objects. An image may be associated with one or more segmentation masks. Each segmentation mask may identify the location of a particular type of objects of interest (e.g. cells, cells of a particular cell type, cellular structure, etc.). Thus, a training or generated image may be associated with a plurality of segmentation masks. The plurality of segmentation masks may comprise a mask for each of a plurality of different types of objects of interest. A plurality of segmentation masks associated with an image may also be referred to as a multichannel segmentation mask.

Embodiments of the present disclosure use greyscale segmentation masks. A greyscale segmentation mask as used herein refers to a segmentation mask that includes pixels in segmented objects that are associated with multiple predetermined values (also referred to as "multilevel" segmentation masks). Each value may be referred to as a "label" or "level". This is by contrast with binary segmentation masks, in which all pixels in the segmentation mask are associated with one of two predetermined values, a first predetermined value associated with pixels that are not part of segmented objects, and a second value associated with pixels that are part of segmented objects. Thus, the greyscale segmentation mask may associate with every pixel a predetermined value selected from a set of 3 or more predetermined values,

7

including a first predetermined value for background pixels, and one of two or more predetermined values for pixels in segmented objects. The term "background pixel" refers to any pixel that is not part of a segmented object. In embodiments, the greyscale segmentation mask is a single channel mask. This makes the methods of the disclosure memory efficient. A single channel mask is a segmentation mask that includes a single channel. A multichannel mask is a segmentation mask that includes multiple channels, each of which may be associated with a plurality of predetermined pixel values as described above (i.e. each of which may be a binary or multilevel / greyscale segmentation mask). In embodiments, a multichannel mask comprises at least one channel that is a multilevel channel. Greyscale segmentation masks can be obtained for training cell microscopy images, and these can be used to train the deep learning models as described herein to generate cell microscopy images and associated greyscale segmentation masks. The use of greyscale segmentation masks advantageously enables the methods of the present disclosure to use as training data cell microscopy images that show significant overlap between cellular structures to be segmented (and therefore to generate segmented cell microscopy images that have these properties). For each single channel greyscale segmentation mask, the predetermined pixel values may be selected by dividing the range of the channel equally by a predetermined number, the predetermined number corresponding to the number of predetermined values to be included in the greyscale segmentation mask thereby creating a number of subranges of equal size, and selecting the predetermined pixel values as the boundaries of the subranges. For example, given a channel with a range from 0 to 255, background pixels may be assigned a value of 0, and pixels in segmented objects may be assigned values between 255 and 0 selected to be equally spaced in this range. For example, for a greyscale channel comprising 5 different predetermined values (labels), a first label may be associated with a pixel level of 51, a second label may be associated with a pixel value of 102, a third label may be associated with a pixel value of 153, a fourth label may be associated with a pixel value of 204, and a fifth label may be associated with a pixel value of 255. In other words, the plurality of predetermined pixel values may be selected as equally spaced pixel values within a predetermined range corresponding to the range of the single channel. This advantageously maximises contrast between the different labels within the greyscale segmentation mask.

A greyscale segmentation mask for a training cell microscopy image may be obtained from any segmentation mask associated with the training cell microscopy image (e.g. a binary segmentation mask, which is most commonly available) by creating a directed graph where each segmented object is represented as a node in the graph, and two nodes are connected by an edge if the segmented objects overlap with each other. The directed graph may be a weighted directed graph. The weight of the edges may be proportional to the degree of overlap between the segmented objects associated with the connected nodes. The use of weighted edges enables filtering of the graph to remove objects that have a degree of overlap above a predetermined threshold. This may be referred to as "thresholding" the graph. This simplifies the model training, leading to a model training process that is more computationally efficient because it is more likely to converge to informative models given a particular training dataset. The predetermined threshold may be a degree of overlap of at least 70%, at least 75%, at least 80%, at least 85%, at least 90% or at least 95%. Thresholding on edge weight in the directed network means may correspond to removing any node (segmented object) that has a degree of overlap by another node (segmented object) above a predetermined threshold. This may not remove nodes that have a total degree of overlap across multiple nodes over the threshold, if no overlap by any single node is above the predetermined threshold. The present inventors have identified that even removing cells that overlap by at least 70% of their area with another object still maintains the vast majority of the data in datasets such as LIVEcell that contain high density segmented cells (where full cells as segmented objects are most likely to overlap with each other compared to e.g. subcellular structures), but results in significantly improved model training. In other words, the inventors have found that this step reduces significantly the complexity of the graph while preserving most of the original information in realistic challenging datasets. The weight of the edges may be calculated as a percentage of the area of the source node that is overlapped by the target node. The weight of the edge u -> v between node u (source node) and node v (target node) may be calculated as the area percentage of the segmented object associated with node u that is covered by the segmented object associated with node v. This can be estimated by dividing the intersection of the area of the segmented object associated with node u and the area of the segmented object associated with node v over the total area of the segmented object associated with node u. This may be referred to as "Intersection over reference" (IoRef). This may be expressed as $IoRef(u,v)=(U \cap V)/U$ where $U$ is the area of the segmented object associated with node u and $V$ is the area of the segmented object associated with node v. Similarly to the more commonly used IoU (intersection over union) metric, this metric has a range of [0,1]. However, contrary to the IoU, the IoRef metric is not symmetrical ($IoRef(u,v) \neq IoRef(v,u)$). An IoU score does not provide information about how much of $u$ or v is covered. By contrast, an IoRef metric is advantageously directly informative of how much of $u$ is covered by v. Areas may be expressed in numbers of pixels or corresponding physical areas. Creating the graph may be performed by obtaining the coordinates of cells in a segmentation file (where the segmentation file may be realised as a single file or a plurality of files, e.g. when each segmented object is associated with a separate file) and assigning a unique identifier to each cell (if the segmentation file does not already contain unique identifiers for each segmented object). The format of the unique identifier is irrelevant. Each unique identifier is then associated with a node in the graph. Edges may then be included based on the coordinates of segmented objects in the segmentation file, by determining whether any segmented object overlaps with another segmented object. For example, for each query segmented object, the pixels (i.e. pixel coordinates) associated with the segmented object can be compared with those of all other segmented objects to determine which segmented objects are associated with pixels that are also associated with the query segmented object. If any such segmented object is identified, an edge can be added from the query object to the identified segmented object(s). The process can be carried out by going through a segmentation file listing coordinates of segmented objects (i.e. coordinates of pixels that form part of each segmented object), in the order that the segmented objects appear in the segmentation file. Note that the edges being directed from the query object to the identified object(s) is an implementation choice, and the reverse is also possible. This process results in a set of connected subgraphs, each connected subgraph including segmented objects that overlap with at least one other segmented object in the connected subgraph. Isolated nodes are associated with isolated segmented objects (i.e. segmented objects that do not overlap any other segmented object). In embodiments, each segmented object is represented as a node in the directed graph, two nodes are connected by an edge if the segmented objects overlap with each other, and the weight and direction of an edge between two nodes depends on the proportion or percentage of the area of the segmented object associated with the source node that is overlapped by the segmented object associated with the target node. In such embodiments, two edges may be included between any pair of overlapping segmented objects comprising a first object and a second object, including a first edge in which the source node is the first object and the target node is the second object, and a second edge in which the source node is the second object and the target node is the first object.

A directed graph associated with a segmentation mask can be transformed into a greyscale segmentation mask by assigning a label to each segmented object, where the label is selected such that no directly connected segmented objects are assigned the same label (i.e. overlapping objects must have different label to make differentiation possible). The label may be selected from a set of labels that has a size (number of different labels) that is the minimum size with which this condition can be fulfilled. This can be achieved by visiting all the connected subgraphs, for example using a flood fill algorithm or breadth-first-search algorithm, and assigning labels to visited nodes using a queue of labels, ensuring that connected nodes are not assigned the same label. The use of a queue of labels ensures that different labels are picked for subsequently visited nodes, and that higher ranked labels (labels that are later in the queue) are only used for connected subgraphs that include high levels of overlaps (because in those connected subgraphs with low levels of overlaps it will not be necessary to progress as high in the queue in order to label all nodes while avoiding that two connected nodes have the same label). In embodiments, the directed graph may be filtered prior to the step of assigning labels to nodes, or after assigning labels to nodes, by removing any node that overlaps with another node by an amount over a predetermined threshold, as explained above. In embodiments, the directed graph may be filtered after the step of assigning labels to nodes, by removing all nodes that are assigned a label that is at or above a predetermined rank in the queue of labels. For example, labels may be ranked in the queue of labels as labels 0, 1, 2, 3, 4, 5, 6, 7, etc. where the original queue may contain as many labels as necessary to label all connected objects without two connected objects being assigned the same label. Then, all nodes labelled with labels at or above a predetermined rank (e.g. all nodes with label 4 and higher) may be removed. This may be referred to as capping the number of labels to a predetermined number (4 in the example above, i.e. 0, 1, 2, 3). Cleaning the graph by thresholding / capping as described above can be done taking into account the proportion of segmented instances (nodes) maintained after thresholding and/or capping. For example, thresholding and/or capping may be performed using a predetermined threshold and/or rank such that at least a predetermined percentage of the segmented objects originally present in the segmentation file are maintained. The predetermined percentage may be at least 90%, at least 95%, at least 96%, at least 97%, or at least 98%. The predetermined pixel value associated with each label may be selected randomly for each training image from a set of predetermined pixel values. The set of predetermined pixel values may be selected as explained above. The random selection of a predetermined pixel value from a set of predetermined pixel values for each label in a queue of label (where the queue of labels contains a number of labels equal to the number of predetermined pixel values in the set of predetermined pixel values) can be achieved by, for each training image of a set of training images (or for each connected subgraph of each training image), randomly shuffling the order of the predetermined pixel values and associating the labels in the queue with the pixel values in the order of the randomly shuffled set of predetermined pixel values (i.e. the first label in the queue is associated with the first pixel value in the shuffled set of predetermined pixel values, the second label in the queue is associated with the second pixel value in the shuffled set of predetermined pixel values, etc.). This advantageously results in a more balanced representation of the different predetermined pixel values over a set of training images. When a plurality of segmentation masks are generated (e.g. one for each of a plurality of types of objects), the process can be applied independently for each type of object for which a greyscale segmentation mask (or mask channel) is obtained.

The methods of the present disclosure make use of deep learning models for generating segmented cell microscopy images. A deep learning model is a machine learning model that comprises a neural network with a plurality of layers. A deep learning model as used herein can be any deep learning model suitable for image generation from non-image input. In other words, a deep learning model as used herein can be an image generation model that does not perform image-to-image translation. A deep learning model as used herein can be any deep learning model suitable for conditional image generation. A deep learning model configured for conditional image generation is a deep learning model that takes as input a random noise vector and conditioning information, and produces as output a generated image (which in the methods of the present disclosure comprises information corresponding to a pair of images including a cell microscopy image and a corresponding segmentation mask). The conditioning information may be limited to a class label. Thus, embodiments of the disclosure use conditional image generation where conditioning is based on a class label alone. A class may be a label representing a type of sample. A class label may be a label that identifies one or more of: the type(s) of cells, cellular structures or tissues in the sample, metadata associated with the sample processing that has been applied to the sample prior to imaging, and metadata associated with the imaging process used to obtain the image to be generated. Thus, embodiments of the disclosure may use an image generation model that takes as input a random noise vector and a class label. The class labels may be defined based on the training data. For example, class labels may be associated with each of the images in the training data, each class label associated with all training images that have characteristics in common, where the characteristics can be selected from: the type(s) of cells, cellular structures or tissues in the sample, metadata associated with the sample processing that has been applied to the sample prior to imaging, and metadata associated with the imaging process used to obtain the image. The deep learning model may be a generative adversarial network (GAN). A GAN is a model that comprises a generator model and a discriminator model. A generator model is a model that is trained to generate an output (here a pair of images comprising a cell microscopy image and a corresponding segmentation mask). This can use as input a random noise vector. The generation can be conditional, in which cases the input additionally includes conditional information. Embodiments of the present disclosure use a class label as conditional information. Thus, the generator model is trained to generate an output that differs based on the class label provided as input to the model. A discriminator model is a model that is trained to determine whether an input (in this case a pair of images comprising a cell microscopy image and a corresponding segmentation mask) is a real example from a training data set (here comprising experimentally obtained cell microscopy images and corresponding segmentation masks) or an example generated by the generator. The discriminator and generator are trained together, such that the generator improves its ability to generate "real looking" images. In embodiments, the output of the generator is a concatenated image and mask vector. This is provided as input to the discriminator during training, and the discriminator is trained to differentiate between inputs that are concatenated real images and corresponding greyscale masks, and inputs that are concatenated synthetic images and corresponding greyscale masks. After training (i.e. in the deployment phase, i.e. when the model is being used to generate synthetic segmented images), only the generator is used. When conditional information is used (e.g. a class label), this is also typically provided as input to the discriminator. The concatenated output of the generator is separated into a first part corresponding to the generated cell microscopy image and a second part corresponding to the generated segmentation mask for this image. The deep learning model can be a diffusion model, such as e,g, as described in Ho et al. 2020. A diffusion model is a neural network that takes as input a random vector (noise image) and embedded conditioning information (which can be e.g. a class or a text description of the image to be generated), and generates an image as output using a denoising network. Diffusion models are easier to train (since they can be trained in an ed-to-end fashion using a single loss function) and more stable than GANs A denoising network can also provide a concatenated output comprising a synthetic image and a corresponding greyscale mask. The diffusion model can be trained using concatenated real images and corresponding greyscale masks, teaching the denoising network to transform a high entropy (random) image into a realistic (detailed) image. The concatenated output of the denoising network can also be separated into a first part corresponding to the generated cell microscopy image and a second part corresponding to the generated segmentation mask for this image. Either or both of these can be displayed to a user on a user interface, e.g. side by side or overlaid onto each other. The user interface may further comprise means for the user to provide corrections to the generated annotations, for example by adding, removing or modifying one or more segmented areas. Note that although the labels are associated with greyscale pixel values, for the purpose of displaying a segmentation mask to a user, any set of colours may be used. Further, a segmentation mask need not be displayed to the user using any colours for the pixels in segmented areas. Instead, it is possible to display only the outline of all segmented areas. This may be particularly useful when displaying a segmentation map overlaid onto a cell microscopy image. The mask vector output by the generator may be a one channel vector (i.e. a vector comprising, for each pixel in the image, a single value). The generated image output by the generator may be a multichannel vector (i.e. including a plurality of values for each pixel, each providing information for a respective one of a plurality of channels), such as e.g. a RGB vector (including for each pixel values corresponding to the intensity of the pixel in the red, green and blue channels). Alternatively, the generated image output by the generator may be a single channel vector (e. a vector comprising, for each pixel in the image, a single value), such as e.g. a greyscale vector. Examples of GANs include conditional GANs, deep convolutional GANs (DCGAN), self-attention GANs (SAGAN), variational autoencoder GANs (GAEGAN), transformer GAN (TransGAN), Flow-GAN, denoising diffusion GANs. Embodiments of the disclosure use GAN architectures based on those in the StyleGAN series from Nvidia, such as Progressive GAN (Karras et al., 2017), StyleGAN-1 (Karras et al., 2019), StyleGAN-2 (Karras et al., 2020), , and StyleGAN-3 (Karras et al., 2023), or conditional versions thereof such as e.g. cStyleGAN2 (Karras et al. 2020) or derivatives thereof such as cStyleGAN2 trained with a D2D-CE loss as described in Kang et al. 2021. Embodiments of the present disclosure use a deep learning model that is based on a conditional version of StyleGAN or StyleGAN2, modified to include a modulated 2D convolutional layer after the style block and after each synthesis block (instead of the tRGB / fRGB blocks) to increase the learned features at each block compared to the original implementation in StyleGAN / StyleGAN2. Embodiments of the present disclosure use deep learning models trained using a data-to-data cross-entropy loss (D2D-CE). This is a modified version of the feature normalized softmax cross entropy loss described in Kang et al. 2021, which encourages the feature extractor to consider data-to-class as well as data-to-data relationships, and guarantee inter-class separability and intra-class variations in the feature space while preventing ineffective gradient updates induced by easy negative and positive samples. An equation for the D2D-CE loss is provided as Equation (6) in Kang et al. 2021. Embodiments of the present disclosure use deep learning models trained as part of a generative adversarial network trained to perform conditional generation. In embodiments of the present disclosure, a deep learning model comprises a generator of a generative adversarial network that uses a classifier network to condition image generation. For example, the GAN may have been trained using the principles of ACGAN (Odena et al., 2017) to perform conditional generation, or the modified version thereof proposed in ReACGAN (Kang et al., 2021). The benefit of ReAC-GAN over ACGAN is the addition of the Data-to-Data Cross-Entropy loss (D2D-CE), which focuses on the classification of strong positive or negative samples during training, avoiding instability in the early training stages. Any GAN architecture may be sued within this framework, such as e.g. the StyleGAN / StyleGAN2 architecture or derivatives thereof, such as e.g. as shown in the Examples below.

The methods of the present disclosure may use of training data comprising real (experimentally acquired) cell microscopy images and associated segmentation masks. The segmentations masks are greyscale segmentation masks that may have been obtained using a method as described above. The training data may comprise cell microscopy images that are images of a predetermined size extracted from larger images (also referred to as "tiles"). Such images may be created from larger images by applying a grid of a predetermined size to generate non-overlapping tiles. The training data may comprise at least 1000 images, at least 2000 images, or at least 3000 images. The training data may comprise cell microscopy images that are each associated with one or more of a plurality of classes. Each class may be associated with at least 100, at least 200, or at least 300 training cell microscopy images. The training cell microscopy images are associated with segmentation masks, typically binary segmentation masks (which may be converted to greyscale masks as explained elsewhere herein), that identify the position of a plurality of segmented objects. These may be referred to as ground truth segmentation masks (and the training cell microscopy images may be referred to as ground truth images). The segmentation masks in the training data may have been obtained by manual annotation by experts, by automated annotation, or a combination thereof. For example, the training data may comprise segmented cell microscopy images selected from the LIVEcell or TissueNet datasets, or any other sets of cell microscopy images with associated segmentation masks. The training data for a particular model may comprise or consist of data that has been acquired using the same microscopy technology. The training data for a particular model may comprise or consist of data that has been acquired using labelled samples that have been labelled for the same cellular structures (although not necessarily using the same labels or protocols). The training data for a particular model may comprise or consist of data that has been acquired using the same type of samples selected from cell culture samples, tissue culture samples, and primary fixed samples. The training data for a particular model may comprise data that has been acquired using samples comprising multiple types of cells or tissues. In such cases, each type of cells (or mixtures of cells) or tissues may be associated with a class label, and the generative methods described herein may use conditional generation, where the generation is conditional on the class label. Each image in the training data may be associated with a sample of a single tissue or cell type, or may show multiple tissues or cell types. In embodiments, each sample is from a single tissue. In embodiments, the training data comprises images of samples that are monocultures (i.e. a single cell type culture). In embodiments, the training data comprises images of samples that are cocultures (i.e. cultures of two or more different cell types). In embodiments comprising training images of samples that show multiple tissues or cell types, those training images may be associated with a plurality of classes, each class associated with a tissue type or cell type. In such embodiments, a plurality of greyscale masks may be obtained using the methods described herein, comprising a separate greyscale mask for each class, cell type or tissue type. Similarly, one or more of the training images may be associated with a plurality of binary segmentation masks, comprising a mask for each tissue, class or cell type represented in a training image. In embodiments, the training data for a particular model may comprise data that has been acquired at different time points in a cell culture process, and/or using different sample processing or image acquisition protocols, whether for the same or different cells or tissue types. In such cases, each type of image (where a type can be associated with a type of cells (or mixtures of cells) or tissues, a time point of acquisition or a protocol, or combinations thereof) may be associated with a class label, and the generative methods described herein may use conditional generation, where the generation is conditional on the class label.

*Methods*

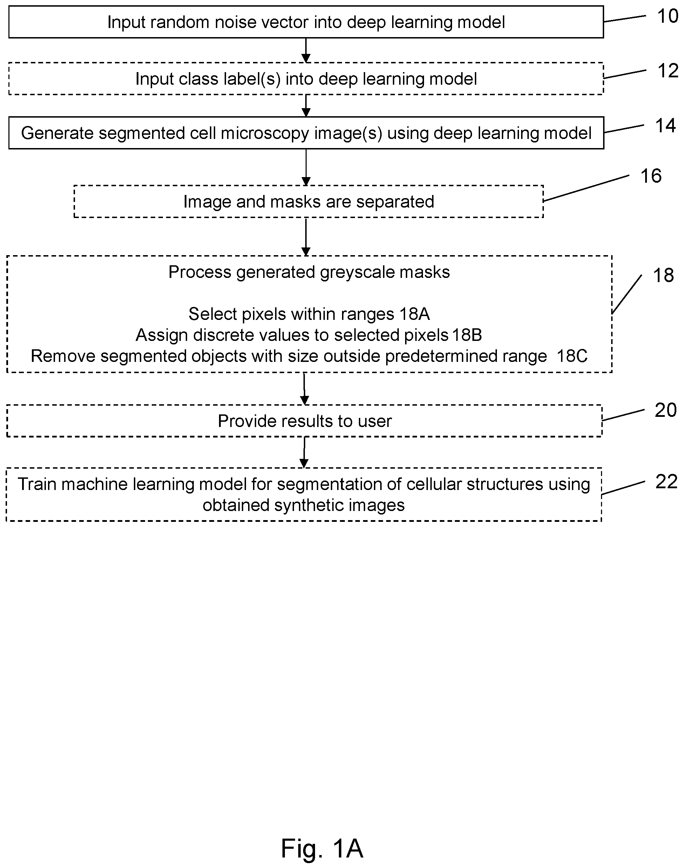

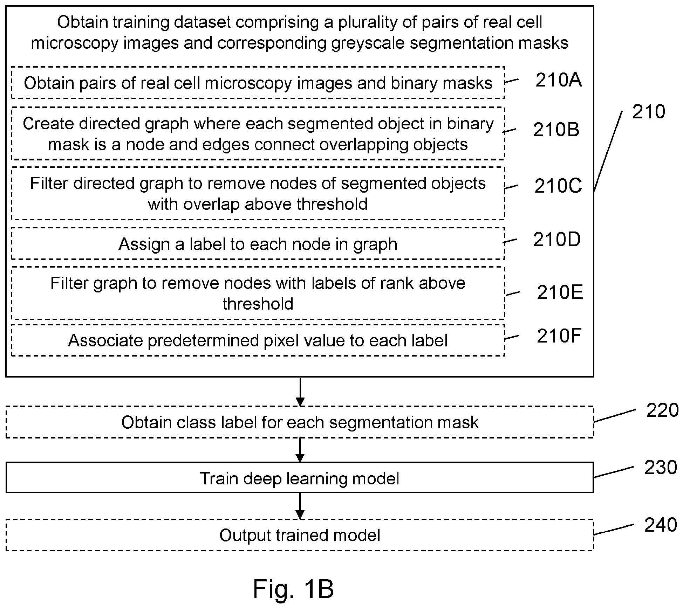

**Figure 1** shows a flow diagram illustrating, in schematic form, a method of generating segmented cell microscopy images as described herein (Fig. 1A), a method of training a deep learning model for generating segmented cell microscopy images (Fig. 1B), and a method of training a machine learning model for cellular structure segmentation in cell microscopy images (Fig. 1A) as described herein. The methods of training a deep learning model and the methods of generating segmented cell microscopy images may each be performed independently, or may both be performed. For example, the steps of a method of training a deep learning model illustrated on **Fig. 1B** may be performed in order to provide a trained deep learning model for use in a method of generating segmented cell microscopy images as described by reference to **Fig. 1A. Figure 1A** is a flowchart illustrating schematically a method of generating segmented cell microscopy images as described herein, and a method of training a machine learning model for cellular structure segmentation in cell microscopy images in which a method of generating segmented cell microscopy images as described herein may be used.

At step 10, a random noise vector is provided as input into a deep learning (DL) model that has been trained to take as input a random noise vector and produce as output a cell microscopy image and a corresponding greyscale segmentation mask, thereby obtaining a cell microscopy image and a corresponding greyscale segmentation mask. The random noise vector may have predetermined dimensions corresponding to the input dimensions of the deep learning model. The random noise vector may be a multidimensional array, and may therefore not be a vector in the strict mathematical sense of the word. A greyscale segmentation mask is a mask where each pixel of each segmented object is assigned a pixel value selected for the segmented object from a predetermined set of pixel values, wherein the selected pixel values are such that no two overlapping segmented objects are assigned the same predetermined pixel value, and the number of pixel values in the predetermined set of pixel values is the smallest number that can be used while fulfilling the condition that no two overlapping segmented objects are assigned the same predetermined pixel value.

In embodiments, as illustrated on Fig.1A, the DL model is a conditional generative model, and the method comprises step 12 of providing as input to the DL model one or more class labels. In such embodiments, the DL model has been trained using training data comprising a plurality of pairs of real cell microscopy images and corresponding greyscale segmentation masks, each pair or each greyscale segmentation mask associated with one or more class labels. The class label may be a label that identifies one or more of: the type(s) of cells, cellular structures or tissues in the sample from which a cell microscopy image has been obtained, metadata associated with the sample processing that has been applied to the sample prior to imaging, and metadata associated with the imaging process used to obtain the cell microscopy image. While steps 10 and 12 are illustrated as separate steps for clarity, when class labels are provided they are typically provided as input to the DL model together with the random noise input.

At step 14, the DL model generates one or more segmented cell microscopy images, each comprising a cell microscopy image and one or more greyscale segmentation masks (which can be e.g. multichannel greyscale segmentation masks as explained elsewhere). The image and mask may be provided as an output of the DL model concatenated into a single output, such as e.g. comprising concatenated values representing the cell microscopy image and the corresponding segmentation mask(s). Therefore, at step 16, the output of the DL model may be separated into separate data outputs corresponding respectively to the generated cell microscopy image and each of the generated greyscale segmentation masks or greyscale segmentation mask channels. At step 18, the generated greyscale segmentation masks are optionally processed to obtain one or more corresponding processed greyscale segmentation masks. The deep learning model may have been trained to take as input a random noise vector and produce as output a cell microscopy image and a corresponding segmentation mask in which pixels are assigned continuous values. Continuous values do not per se correspond to distinct classes as would be expected in a segmentation mask. Therefore, such an output can be processed to generate objects each associated with discrete labels. Step 18 may comprise step 19A of applying range filtering to a generated segmentation mask produced by the deep learning model to select pixel values within respective predetermined ranges associated with each of respective predetermined pixel values in a set of predetermined pixel values that were used in the training data. For example, pixels within a predetermined range may be considered to be associated with the predetermined pixel value that is associated with the predetermined range. Step 18 may comprise step 18B of obtaining a processed segmentation mask in which each of the selected pixels in the segmentation mask output by the deep learning model is associated with the predetermined pixel value of the predetermined range associated with the pixel value output by the deep leaning model. In other words, step 18A-B may comprise selecting pixels within said ranges and re-assigning to each of the selected pixels a predetermined pixel value (i.e. a discrete pixel value, corresponding to a discrete label) associated with the range in which the pixel value fell. This process results in segmented objects, i.e. regions of the greyscale segmentation mask in which every pixel of the region have one of a set of discrete predetermined values. Any non-selected pixels may be associated with a default pixel value (e.g. 0, indicating background / area not forming part of a segmented object in the particular channel). The method may further comprise step 18C of removing from the processed segmentation mask any segmented object (wherein a segmented object is a continuous area associated with a single pixel value) that has a size outside of a predetermined range. The predetermined range may be derived from an expected size of the segmented objects, such as e.g. based on predetermined percentiles of a size distribution of the segmented objects in the training data.

At optional step 20, one or more results may be provided to a user. This may include any of the information obtained at any of steps 14 to 18, or any information derived therefrom such as e.g. image statistics, segmented objects statistics, binary segmentation masks corresponding to the generated masks, etc. Step 20 may comprise displaying a generated image and one or more of the associated generated greyscale masks (or selected channels thereof) on a user interface.

At optional step 22, the cell microscopy image(s) and corresponding greyscale segmentation mask(s) may be used to train a machine learning model for segmentation of cellular structures in cell microscopy images. The machine learning model may be trained using the synthetic images output by the DL model described above. The training data may also comprise real cell microscopy images and associated segmented masks. The training data may comprise synthetic and real cell microscopy images in any ratio. For example, the training data may comprise at least 1%, at least 2%, at least 5%, at least 10% synthetic images. The training data may comprise at most 50%, at most 40%, at most 30%, at most 20% or at most 10% synthetic images.

**Figure 1B** is a flowchart illustrating schematically a method of training a deep learning model for generating segmented cell microscopy images. The deep learning model used at steps 10-18 of Figure 1A may have been obtained using a method as described in relation to steps 210-250 of Figure 1B.

At step 210, a training dataset comprising a plurality of pairs of real cell microscopy images and corresponding greyscale segmentation masks is obtained. "Real" cell microscopy images may also be referred to as "measured" or "experimentally acquired" cell microscopy images. The cell microscopy images may be received from a user interface, a data store, or an image acquisition means, such as a microscope. Alternatively, the method may comprise acquiring cell microscopy images using a microscope such as e.g. an optical microscope (e.g. brightfield microscope, phase contrast microscope), or a fluorescence microscope, before obtaining a greyscale segmentation mask for each image, thus providing the training data. Step 210 may comprise a step 210A of obtaining a plurality of pairs of real cell microscopy images and corresponding segmentation masks identifying the location of each of a plurality of segmented objects. These masks may be binary segmentation masks, also referred to as semantic segmentation masks. By contrast, the greyscale segmentation masks are instance segmentation masks. Step 210 may comprise step 210B of creating a directed graph where each segmented object is represented as a node in the graph, and two nodes are connected by an edge if the segmented objects overlap with each other. The edges may be weighted based on the degree of overlap between objects corresponding to connected nodes. Step 210 may comprise step 210C of filtering the directed graph by removing all nodes corresponding to objects that have a degree of overlap above a predetermined threshold (e.g. based on the weights of the edges). Step 210 may comprise step 210D of assigning a label (corresponding to a selected pixel value) to each node of the directed graph from a predetermined set of labels (each corresponding to a respective selected pixel value), wherein the selected label is such that no two connected nodes in the graph are assigned the same label, and the number of labels in the predetermined set of labels is the smallest number that can be used while fulfilling the condition that no two connected nodes are assigned the same label. Step 210D of assigning a label to each node of the directed graph from a predetermined set of labels may be performed by traversing connected subgraphs of the graph (e.g. using a breadth-first-search algorithm), and selecting for each newly visited node a label from a queue of labels, ensuring that connected nodes are not assigned the same label. In embodiments, a newly visited node is assigned the label that is the earliest label in the queue of labels that differs from the labels already assigned to nodes connected to the newly visited node. Each label in the queue of labels is associated with a predetermined pixel value. Step 210 may comprise step 210E of filtering the directed graph by removing all nodes that have a label with a rank in the queue of labels above a predetermined rank. For example, in an embodiment in which a queue of labels of length 8 is necessary to ensure that connected nodes are not assigned the same label, all nodes with labels after the fifth label in the queue may be removed. This results in a connected graph in which all nodes have a label selected in a set of 5 different labels. Step 210 may comprise step 210F of associating a selected pixel value from a predetermined set of pixel values to each label. This may comprise defining a predetermined set of pixel values comprising a number of pixel values equal to the number of labels used in the graph. The set of predetermined pixels values may be selected as boundaries of equal size subranges of a total range corresponding to the range of the greyscale channel, the number of subranges corresponding to the number of predetermined pixel values in the set. For example, for a 5-label set (which can be denoted as 0, 1, 2, 3, 4) and a greyscale pixel value range of 256 (pixel values 0 to 256), the selected pixel values may be 51, 102, 153, 204, 255 (a pixel value of 0 denoting background pixels / no label). Step 210D may further comprise randomly shuffling the order of the predetermined set of pixel values associated with each label for each training cell microscopy image or each connected subgraph in each training cell microscopy image. For example, a set of labels may be 0, 1, 2, 3, 4 and a set of pixel values may be 51, 102, 153, 204, 255. For a first training image or connected subgraph, every node with label '0' may be associated with pixel value 51, every node with label '1' may be associated with pixel value 102, every node with label '2' may be associated with pixel value 153, every node with label '3' may be associated with pixel value 204, and every node with label '4' may be associated with pixel value 255. For a second training image or connected subgraph, the order of the pixel values may be randomly shuffled to e.g. 153, 51, 102, 204, 255. In this training image or connected subgraph, every node with label '0' may be associated with pixel value 153, every node with label '1' may be associated with pixel value 51, every node with label '2' may be associated with pixel value 102, every node with label '3' may be associated with pixel value 204, and every node with label '4' may be associated with pixel value 255.

At optional step 220, a class label may be obtained for each greyscale segmentation mask, each greyscale segmentation mask channel or each image in the training data. The class label may be a label that identifies one or more of:

the type(s) of cells, cellular structures or tissues in the sample from which a cell microscopy image has been obtained, metadata associated with the sample processing that has been applied to the sample prior to imaging, and metadata associated with the imaging process used to obtain the cell microscopy image.

At step 230, the DL model is trained using the training dataset obtained in 220, and optionally the class label(s) obtained in step 220. The training at step 230 may be performed using a cross-validation scheme in which one or more pairs of cell microscopy image and corresponding greyscale mask are excluded from the training set at each cross-validation fold. At step 240, the trained model may be provided to a user or computing device, for example for use in a method as described in reference to Fig. 1A.

The methods described herein find utility in a variety of contexts where more or different segmented cell microscopy images are desired than available from datasets of experimental segmented cell microscopy images. In other words, the methods described herein find utility in any context in which a deep learning model is trained or deployed using segmented cell microscopy images, since data augmentation is expected to be useful in any such situations given the high data requirements for deep learning models to learn distributions and make predictions. This may the case for example in any process in which one or more algorithms for segmenting cell microscopy images is being trained or optimised. For example, the methods described herein may be used in the context of training a machine learning model for cellular structure segmentation in cell microscopy images. This may be particularly useful in cases where the amount of manually segmented training data and/or experimentally obtained training data is not sufficient to obtain a trained machine learning model that has desired properties (e.g. performance, generalisability) in relation to a particular set of cell microscopy images. For example, there may not be sufficient training data for a particular cell type or type of images, or for a particular segmentation task. Indeed, the inclusion of a small number of artificial annotated images has been shown to increase the accuracy of models trained for cell segmentation. Further, the methods described herein can be used to enable training of such models in situations where it is desirable for the models to make use of smaller datasets of less accessible cell types (such as patient-derived or stem cells) to be supplemented.

Thus, also described herein are methods of training a machine learning model for cellular structure segmentation in cell microscopy images, the method comprising: obtaining synthetic images using the method illustrated by reference to steps 10 to 18 on **Figure 1A;** and training a segmentation machine learning model using a training data set comprising the obtained synthetic images at step 22.

The method may comprise providing the synthetic images on a user interface and obtaining corrected synthetic images (annotation fine tuning).

Other methods have been suggested for generating segmented cell microscopy images. For example, Zargari et al. 2024 described a CycleGAN-based architecture that generates annotated synthetic phase-contrast or fluorescent images. The approach was primarily designed to train a segmentation model as part of the cycleGAN model, for later use as a stand-alone segmentation model, rather than to generate new segmented data from scratch which would be available to train any other model. This uses a 2D-UNET-based image generator with a style generation path, a separate segmentation model, and two adversarial PatchGan discriminators. The approach differs from those of the disclosure in several important ways. Firstly, the approach uses binary masks and therefore does not handle problems associated with overlapping cells (segmentation of densely populated images). Further, the approach uses a CycleGAN architecture. This is an architecture designed for image-to-image (I2I) translation, which is to transform images from one domain to another, in this case from segmentation masks to microscopy and vice versa. This means that I2I do not synthesize images alone, they always need a conditional input (i.e. the style generator takes as input a segmentation mask and produces as output a corresponding cell image, and the segmentation generator takes as input a cell image and produces as output a segmentation mask), which is not the case for the methods described herein, which synthesize annotated images from scratch by sampling from random noise. Further, by contrast with a regular GAN architecture, CycleGAN is composed of two generators and two discriminators, leading to a higher computational complexity. Approaches of the present disclosure use a single generator and a single discriminator to avoid this additional complexity.

*Systems*

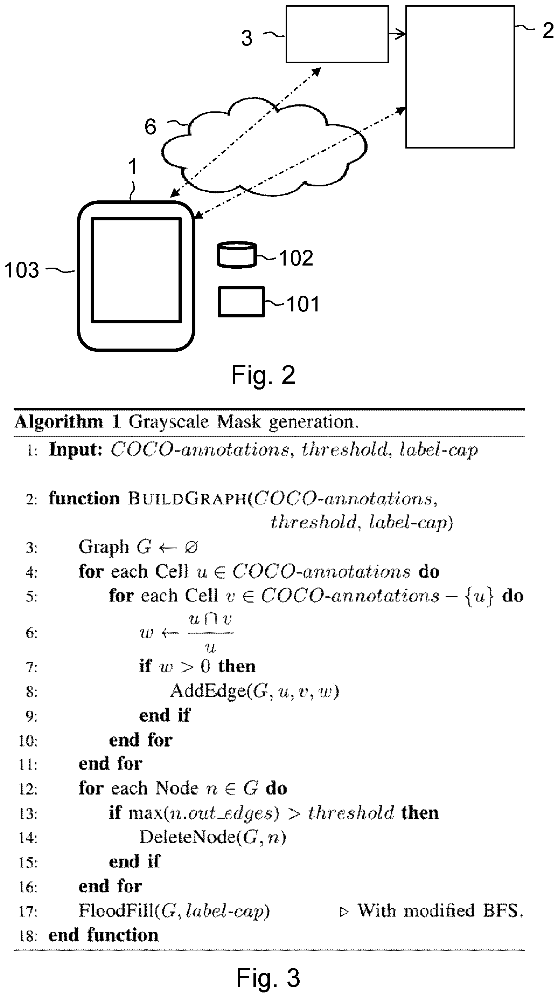

**Figure 2** shows an embodiment of a system for implementing the methods described herein. The system comprises a computing device 1, which comprises a processor 101 and computer readable memory 102. In the embodiment shown, the computing device 1 also comprises a user interface 103, which is illustrated as a screen but may include any other means of conveying information to a user such as e.g. through audible or visual signals. The computing device 1 is communicably connected, such as e.g. through a network, to image data acquisition means 3, such as a microscope, and/or to one or more databases 2 storing cell microscopy image data. The one or more databases 2 may further store one or more of: real and/or synthetic cell microscopy images, segmentation masks associated with real and/or synthetic cell microscopy images, training data, parameters (such as e.g. parameters of a machine learning model used to generate synthetic cell microscopy images, image related information (such as e.g. image metadata, including e.g. cell type, microscopy technology, etc.), etc.). The computing device 1 may be a smartphone, tablet, personal computer or other computing device. The computing device 1 is configured to implement a method for implementing the methods described herein, such as a method of generating segmented cell microscopy images, a method of training a deep learning model for generating segmented cell microscopy images, and/or a method of training a machine learning model for cellular structure segmentation in cell microscopy images. In alternative embodiments, the computing device 1 is configured to communicate with a remote computing device (not shown), which is itself configured to implement a method as described herein. The remote computing device may be a non-distributed computing device, a server, a cloud computer, or any distributed computing system. In such cases, the remote computing device may also be configured to send the result of the method to the computing device. In embodiments, some of the methods described herein, or steps thereof, are implemented by the computing device 1, and other methods or steps thereof are implemented by the remote computing device. For example, the remote computing device may be configured to implement a method of training a machine learning model for cellular structure segmentation in cell microscopy images as described herein. The remote computing device may provide the trained machine learning model to the computing device 1, and the computing device 1 may use the trained machine learning model to generate segmented cell microscopy images as described herein. The computing device 1 may also use the generated segmented cell microscopy images alone or in addition to experimentally obtained segmented cell microscopy images (e.g. obtained from database 2) to train a cellular structure segmentation machine learning model. As another example, the remote computing device may be configured to implement a method of training a machine learning model for cellular structure segmentation in cell microscopy images as described herein, and to use the trained machine learning model to generate segmented cell microscopy images as described herein. The remote computing system may provide one or more of the generate segmented cell microscopy images to the computing device 1. The computing device 1 may be configured to use the generated segmented cell microscopy images alone or in addition to experimentally obtained segmented cell microscopy images (e.g. obtained from database 2) to train a cellular structure segmentation machine learning model. Communication between the computing device 1 and the remote computing device may be through a wired or wireless connection, and may occur over a local or public network 6 such as e.g. over the public internet. The image data acquisition means 3 may be in wired connection with the computing device 1, or may be able to communicate through a wireless connection, such as e.g. through WiFi and/or over the public internet, as illustrated. The connection between the computing device 1 and the image data acquisition means 3 may be direct or indirect (such as e.g. through a remote computer). The image data acquisition means 3 are configured to acquire cell microscopy image data from cell samples. The image data acquisition means 3 may be a microscope such as e.g. an optical microscope (e.g. brightfield microscope, phase contrast microscope), or a fluorescence microscope.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof. While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention. For the avoidance of any doubt, any theoretical explanations provided herein are provided for the purposes of improving the understanding of a reader. The inventors do not wish to be bound by any of these theoretical explanations. Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps. It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

The following is presented by way of example and is not to be construed as a limitation to the scope of the claims.

***Examples***

***I. Introduction***

Data scarcity and annotation limit the quantitation of cell microscopy images. Data acquisition, preparation and annotation are costly, and time-consuming. Additionally, cell annotation is an error-prone task that requires personnel with specialized knowledge. Generative artificial intelligence is an alternative to alleviate these limitations by generating realistic images from an unknown data probabilistic distribution. Still, extra effort is needed since data annotation remains an independent task of the generative process.

The present examples demonstrate the use of generative models to learn meaningful instance segmentation-related features in cell microscopy images, and to produce realistic annotated images.

The inventors developed a single-channel greyscale segmentation mask pipeline that differentiates overlapping objects while minimizing the number of labels. Additionally, the inventors propose a modified version of the established StyleGAN2 generator that synthesizes images and segmentation masks simultaneously without additional computational cost. The inventors tested this generative pipeline with LIVECell and TissueNet, two benchmark cell segmentation datasets. Furthermore, the inventors augmented a segmentation deep learning network with synthetic samples and illustrated improved or on par performance compared to its non-augmented version. The results support that the features learned by generative models have relevance in the annotation context. With adequate data preparation and regularization, generative models are capable of producing realistic annotated samples cost-effectively.

## *II. Methods*

### A. Datasets

Convolution networks work best with square images, so squared tiles were extracted from the original images to train the models. This was done using different sizes (512x512 or 256x256, respectively for LIVECell and TissueNet) and processes based on the characteristics of the respective datasets, as will be explained below. Thus, any method described herein may generate square images and may be trained using square images (also referred to herein as "tiles"), which may have been extracted from larger images.

*LIVECell:* The LIVECell dataset (Edlund et al., 2021) is a monoculture phase-contrast microscopy dataset consisting of high-resolution images from eight cell types (A172, BT-474. BV-2, Huh7, MCF7, SH-SY5Y, SkBr3, and SK-OV-3; eight classes) designed to train deep learning instance segmentation models. It contains 1,310 images of 1,408 $\times$ 1,040 resolution, resulting in more than 1.6 million annotated cells. Experienced biologists oversaw both segmentation and assessment to ensure high-quality, fully annotated images. Moreover, LIVECell images were taken every four hours from the samples to capture the cell morphology and population density variability through time.

In Edlund et al. 2021, the authors divided each high-resolution image into four non-overlapping tiles of $702 \times 520$ to build the dataset and divided the whole dataset into three splits; training, test, and validation. The inventors used training and test data splits for the experiments below with the exception that some artifacts of the original dataset were removed, specifically duplicated annotations in some images that were not corrected (refer to the supplementary materials of the LIVECell publication, Edlund et al., 2021). In the present work, the overlapping threshold approach described below was used to remove those problematic annotations. Additionally, the present work used a random 512 x 512 tile selection from within the larger tiles in Edlund et al. 2021. Thus, the images generated by the model (see below) were also at 512x512 resolution. With this, the inventors' GAN architecture used a well-balanced dataset with over 300 images per class (where the class here is a cell type, i.e. over 300 images for each of: monocultures of A172, BT-474. BV-2, Huh7, MCF7, SH-SY5Y, SkBr3, or SK-OV-3 cells).

*TissueNet:* The TissueNet dataset (Greenwald et al., 2022) is a fluorescence microscopy dataset created to train robust, general-purpose segmentation networks. To ensure model robustness, TissueNet is a collection that aims to store as much information as possible.

Therefore, the authors of Greenwald et al. 2022 gathered the data from different sources, such as published and unpublished datasets from different institutions, comprising six platforms, three species, and both healthy and diseased tissues. Samples are clustered together in nine tissue types, and each image only has two channels; DAPI to highlight the nucleus and E-cadherin or Pan-keration to highlight the membrane/cytoplasm.

TissueNet has 1.3 million whole-cell annotations and 1.2 million nucleus annotations. The data annotation was carried out with a cyclic pipeline. First, the model's prediction is corrected by expert annotators to further fine-tune the segmentation model until reaching human performance. After training, the dataset is curated one last time by the experts.

Although the training split of TissueNet is composed of 2,580 $512\times512$ images, several images contain black regions, and the dataset is heavily class imbalanced (between cell types). Because of this, the inventors extracted a subsection to train the model presented herein. Specifically, in contrast to the LIVECell experiments, the inventors first selected only those images which had an effective region of at least $256 \times 256$ pixels, where an effective region is defined as a region with non-zero pixel value (i.e. all 512x512 images that did not contain at least one 256x256 region with pixel values different from 0 were filtered out). Using an effective region of 512 x 512 pixels resulted in too few samples and training was not possible. Then, the inventors extracted random tiles of size $256 \times 256$ and nuclei annotations for all experiments with the TissueNet dataset. This process ensures that none of the training images can be a completely black region. The training split is composed of images from the breast, colon, esophagus, lymph node metastasis, pancreas, and tonsil tissues. Each image must have at least 256 pixels in width and height to ensure an effective tiling during training, comprising a total of 2,376 training images.

B. Data Preparation

Data representation is the first limiting factor for generating synthetic annotated data. Different from textual data, representing information in imaging is not a trivial task. LIVECell dataset stores its segmentation information in COCO format (Lin et al., 2014), a text representation that is incompatible with traditional GANs that are designed to generate images. In contrast, TissueNet stores the annotations in a single-object binary mask, which translates into variable channel output if a GAN is trained to produce a binary mask for each object in the generated image. In other words, the TissueNet data comprises a separate binary mask for each cell (each including two masks, one for the nucleus and one for the cytoplasm), representing a significant limitation for use of this dataset in generative models. GenAI models are normally designed to produce a fixed number of channels, meaning this method for storing annotations is not appropriate. Additionally, cell microscopy adds a new constraint since densely populated samples produce significant object overlapping, interfering with the idea of using a single binary mask to annotate the set of objects present on an image.

Due to these limitations, the inventors opted to implement a greyscale mask representation.

*Greyscale Segmentation Mask:* Using the whole pixel value bandwidth, it is possible to produce a single-channel multi-object representation at low memory and complexity cost while avoiding ambiguity between overlapping objects. The goal of the proposed greyscale mask is to use different tones of gray (labels) to enforce that overlapping objects have different labels, and define clear margins for each object. However, it is important to minimize the number of labels because as they increase, the contrast between objects minimizes, impairing the GAN learning process. Minimizing the number of labels will maximize the spacing of gray tones (contrast) in the greyscale spectrum.

In an ideal scenario, a greyscale mask would require a single label if there are non-overlapping objects, resembling a binary mask. The number of labels depends solely on the amount of object overlapping. Fully understanding the object distribution in an image is key to minimizing the number of labels. Therefore, the inventors decided to represent the objects of an image with a directed weighted graph.

Given an arbitrary image, its graph representation is obtained which is composed of the nodes representing the segmented objects, while the edges represent any degree of overlap between the source (u) and target (v) nodes. The weight of the *u* ----> v edge is the area percentage of u that is covered by v, which is estimated by dividing the intersection of u and v over the total area of u. This implementation makes a directed graph by definition, since the overlapping estimation depends on the source node. Further, the graph includes an incoming edge and an outgoing each for each pair of overlapping nodes (because the overlap in both directions is considered, and the percentage of *u* that is covered by *v* is not necessarily equal to the percentage of *v* that is covered by *u*). The inventors decided to use this weighting instead of a more common measure such as Intersection over Union (IoU) as this information allows refining the graph by removing highly overlapping objects and reducing the graph complexity, which also translates to minimizing the number of labels. Specifically, $IoU(u, v) = \frac{u \cap v}{u \cup v}$ with a value in the range [0,1]. Here, IoU = 1 reflects when source cell *u* = target cell v with perfect overlap, an impossible situation in this case. Moreover, an IoU score does not indicate how much of either cell is covered. Therefore, the inventors instead use IoRef (Intersection over Reference/source cell), where $IoRef(u, v) = \frac{u \cap v}{u}$. This metric also has a value in the range [0,1], but can be directly interpreted as how much of *u* is being covered by v, noting that *IoRef(u,v)* ≠ *IoRef(v,u)*.

Once the graph is built, subgraphs depict the set of overlapping objects, meaning that the most complex subgraph defines the maximum number of labels in the image. The inventors then traverse through each subgraph using the Flood Fill algorithm, which implements a modified breadth-first search (BFS) with custom labeling to ensure that connected nodes are labeled with the smallest available label. The flood fill algorithm is based on a breadth-first-search process that colours nodes in all directions from a starting node if they have not yet been visited (e.g. nodes connected to a starting node are switched from 0 to 1 if they have not yet been visited, then visiting nodes become new starting nodes, etc.). While a traditional BFS simply colours nodes based on whether they were visited or not, the modified implementation designed by the inventors first inspects all current connecting nodes, and picks a colour that is not present on any neighbours. For example, when arriving at a node whose neighbours have colour values 1, 2 and 4, the node will be assigned a value of 3 rather than 5, to ensure a minimum total number of labels, before progressing to the next uncoloured node. Using this approach, each node is visited and labelled with the minimum number of labels. In this study, a single greyscale mask is sufficient, as the datasets are monoculture. However, when using co-culture datasets, a greyscale mask per cell class may be used. **Fig. 3** presents the pseudocode of the inventors' graph implementation.

The inventors implemented the Graph cell distribution representation in LIVECell dataset to know the number of labels required to mark every cell in each cell type separately. Three different setups were tested to assess the difference in cell labels; full dataset and removing cells whose total area is covered 90% and 70% by its neighbors. Then, the inventors identified the number of cells removed with the thresholding and their label distribution. Further, the inventors assessed the quality of the mask generation by inspecting its pixel distribution. In real data masks (training data), the pixel distribution shows sharp peaks at each of the chosen values along the greyscale range (e.g. 5 peaks at locations spread evenly between the ends of the range, when using 5 different labels). Since the generative model's output is taken from a Tanh activation function, the initial output range is [-1,1], which is mapped to mask pixel values ranging from 0 to 255 (i.e. any pixel in the segmentation mask can take any value between 0 and 255), because the images manipulated in this work are stored in 256-bitmatrices, which are efficiently stored and manipulated. Note that other resolutions could be used. In a well performing situation the generated distribution must resemble the original pixel distribution (i.e. the segmentation masks generated should have features that resemble the training segmentation masks, which only use e.g. 5 different values of pixels (and 0 - background)).

C. Network Architecture

The baseline approach is ReACGAN (Kang et al., 2021), an architecture based on StyleGAN2 that applies the principles of ACGAN (Odena et al., 2017) to perform conditional generation. The benefit of ReAC-GAN over ACGAN is the addition of the Data-to-Data Cross-Entropy loss (D2D-CE), which focuses on the classification of strong positive or negative samples during training, avoiding instability in the early training stages.

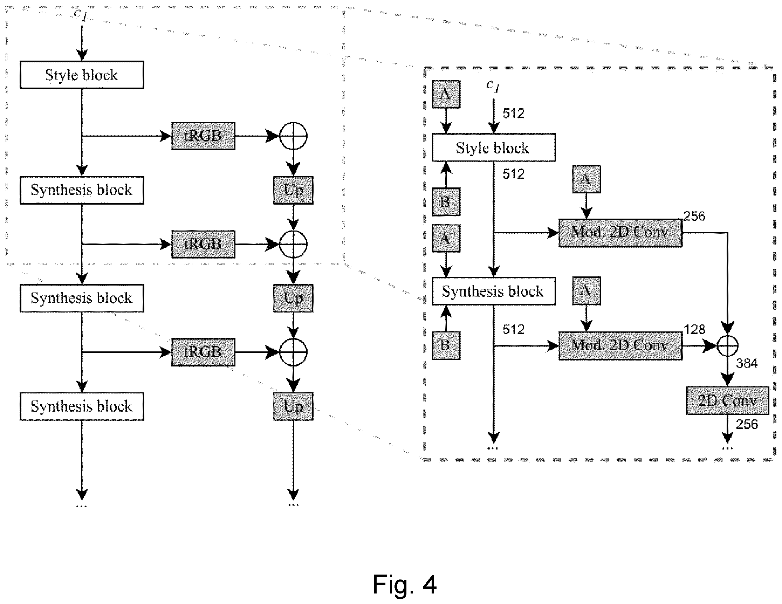

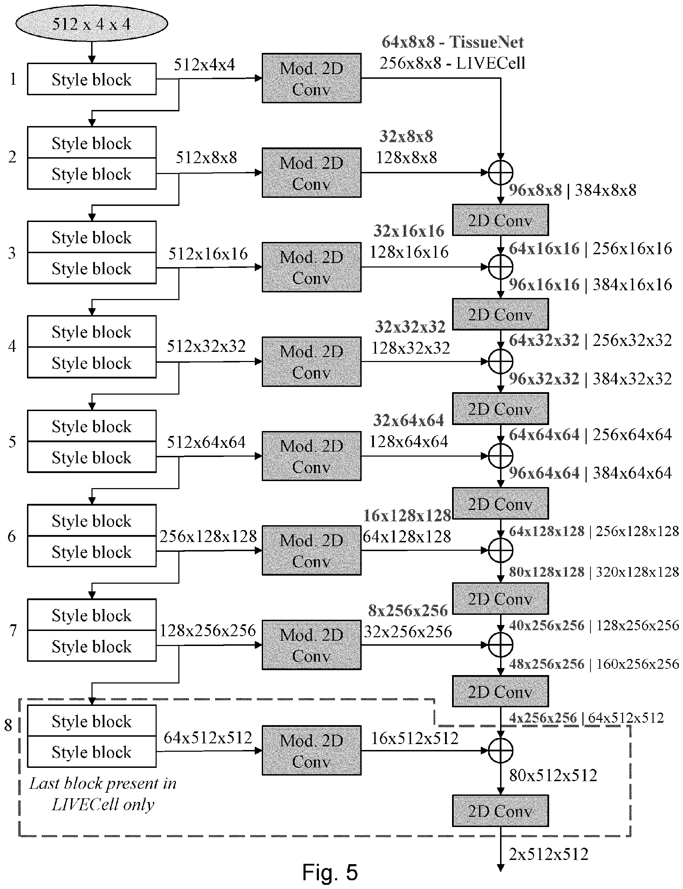

The StyleGAN2 architecture is described in Karras et al. 2020. The architecture used here was as described herein apart from the modifications that will now be explained. Similar to the StyleGAN2 original input/output skip configuration, the inventors used the main generator branch as a feature extractor to generate the images. However, they use modulated convolutions in the skip connections to extract a fraction of the features of each block and then merge them with the next block through concatenation and a convolutional layer. The feature channels decrease while the resolution increases through the network until reaching the desired dimensions. **Fig. 4** depicts the architecture of the first two blocks of the generator (left shows the normal StyleGAN2 architecture, right shows the modified architecture developed by the inventors). The inventors reduced the number of extracted features four times to avoid overfitting during training. On **Fig. 4**, [A] denotes a learned affine transformation from W (an intermediate latent space that the input latent code z is projected into - this projection is done by a network not shown, in practice a multilayer perceptron as in the original StyleGAN2; with 2 layers for the LIVECell model and 4 layers for the TissueNet model) that produces a style that controls the layers of the synthesis network, [B] is a noise broadcast operation (which injects noise), tRGB are layers that project feature vectors to RGB colours using 1x1 convolutions, and c1 is a constant input. The StyleGAN2 architecture uses progressively higher resolutions in the generator and the discriminator blocks, with bilinear upsampling blocks denoted [UP] on **Fig. 4** (note that corresponding [down] blocks (downsampling blocks) and [fRGB] blocks (fromRGGB, convert between RGB and high-dimensional per-pixel data) are present in the discriminator. In the original StyleGan2 model, all the information from the style block goes to the [tRGB] block which outputs a 3 channel (RGB) image. This is because the model creates a low resolution image, then progressively increases the image resolution at each block. By contrast, because the present model generates two images (an image and a segmentation mask) at each resolution, the information at each resolution level cannot be mapped down to RGB, it is informative as a whole for further levels. Therefore, instead of reducing down the output of the style block to 3 channels, the new architecture reduces it from 512 channels to 256 channels using modulated convolutions. The output of the synthesis block is reduced from 512 to 128 channels also using modulated convolutions. These are then concatenated and further reduced to 256 channels. This is concatenated with the output of the next synthesis block after it has been reduced to 128 channel using modulated convolutions. Again the concatenated output (128 channels from the latest synthesis block, 256 channels from the preceding blocks) is reduced to 256 through another modulated 2D convolution. This iteration of modulated convolution and concatenation is repeated seven times for a total of eight levels for the LIVECell model (7 synthesis blocks), and 6 times for the TissueNet model for a total of 7 levels (6 synthesis blocks), as shown in **Figure 5** (where the last block in the dashed box is present in the LIVEcell model but not in the TissueNet model). On Figure 5, the first (blue, bold) dimensions indicate the dimensions in the TissueNet model and the second (black, normal font) dimensions indicate the dimensions in the LIVECell model. When only one set of dimensions is provided these apply to both models (except for the last block which is only present in the LIVECell model as indicated above). The first oval box indicates the input, with dimensions $512 \times 4 \times 4$ (channels $\times$ height $\times$ width) in the illustrated embodiment. Each synthesis block is composed of 2 style blocks. The diagram on Figure 5 does not show the [A] and [B] blocks for simplicity, even though they are present as illustrated on Figure 4. The discriminator is the same as in the original StyleGan2 configuration. Because the discriminator only analyses the images and masks, it does not need any special configuration and is therefore not a mirror of the modified generator described above. The final output is obtained as an image that includes a number of channels equal to the number of channels in the microscope images that the model is trained to synthesize (e.g. 1 channel if greyscale, 3 channels if RGB) + 1 channel for the greyscale segmentation mask.

D. Evaluation

For quantitative image evaluation, the inventors used the Fréchet inception distance (FID) (Heusel et al., 2017) and Kernel Inception Distance (KID) (Binkowski et al., 2018) to measure image quality. Both metrics estimate the probability distribution of real and generated images using the intermediate features of the classification Inception v3 (Szegedy et al., 2016) network trained on the ImageNet dataset (Deng et al., 2009). The differences lies in their assumptions about data distribution. A lower score in both FID and KID indicates higher image quality. The FID is one of the most popular metrics to assess generative model quality, since it correlates with human judgment (Borji et al., 2019), while KID is an unbiased metric regarding data sample size.

Assessing the quality of the generated masks directly, on the other hand, is not a straightforward task. Hence, the masks were indirectly evaluated by training the segmentation network presented with the LIVECeII dataset (Edlund et al., 2021) with real and generated data. The inventors tested the masks of the LIVECell model only, considering that this dataset has a higher complexity (512x512 training tiles) and more data for the segmentation training compared to the TissueNet data (256x256 training tiles). First, the inventors progressively added varying amounts of generated data to the full real dataset, testing models with 1,600, 3,200, and 6,400 generated images to examine the impact of synthetic data. Based on these results, the inventors went on to fix the number of generated images at 3,200 and progressively increased the amount of real data, training four models with 25%, 50%, 75%, and 100% of the real dataset. The whole LIVECell dataset includes 1,310 images of 1,408x1,040 resolution. Each image was divided into four tiles of 704x520, resulting in a total of 5240 tiles. From those tiles, the inventors used the training split of 3188 images to train the GAN architecture. The percentages of the real dataset refer to the percentage of this 3188 image set. Every split considered the sampling time and the cell type class to avoid data overrepresentation due to a data imbalance. As in the LIVECell publication, the segmentation model performance was measured with the overall average precision (AP) loU segmentation score in the test dataset split. The inventors trained both augmented and baseline models under the same conditions for reproducibility.

Finally, the test dataset was further divided into three categories based on the time each sample was taken. Early, mid, and late test splits were defined. This was performed because the LIVECell dataset has a strong influence on time sampling because the cell morphology and population density are highly variable for each cell type, therefore potentially leading to different performances across these sets considering that the generative model is trained using data across all time points.

E. implementation Details

The inventors modified the ReACGAN implementation trained for ImageNet of StudioGAN (Kang et al., 2023), a GANs benchmark that stores several architectures and configurations for different benchmark datasets. In their implementation, a training sample is composed of three elements: image ($l$), mask ($m$), and class label (C); during preprocessing, each cell type (LIVECeII) or tissue type (TissueNet) is assigned an integer C which is provided to the network. These elements are fed into the model similarly to ReAC-GAN with the difference that $m$ and $l$ are first concatenated and then fed into the discriminator. For data augmentation, the inventors applied Differentiable Augmentation (Zhao et al., 2020), Adaptive Discriminator Augmentation (ADA) (Karras et al., 2020), and Adaptive Pseudo Augmentation (APA) (Jiang et al., 2021) to both models.

The LIVECell GAN model used a two-block mapping network (a multilayer perceptron, each block comprising a fully connected layer, i.e. a 2-layer MLP) and random $512 \times 512$ greyscale tiles for training with a learning rate of 0.0025, while TissueNet used a four-block mapping network (i.e. a 4-layer MLP), random $256 \times 256$ RGB training tiles, and a smaller learning rate (0.0005). Because TissueNet is an RGB dataset, it contains triple the information per image (three channels) compared to phase contrast microscopy (single channel images). This suggests that a higher capacity i.e. deeper network would likely be beneficial to analyse RGB data, which the inventors confirmed (achieving better results with deeper mapping networks for the TissueNet data). Both models were trained with a batch size of 16 for 60,000 iterations with an evaluation every 500 iterations to select the model checkpoint based on the best FID score.

### III. Results

A. Greyscale Mask Generation

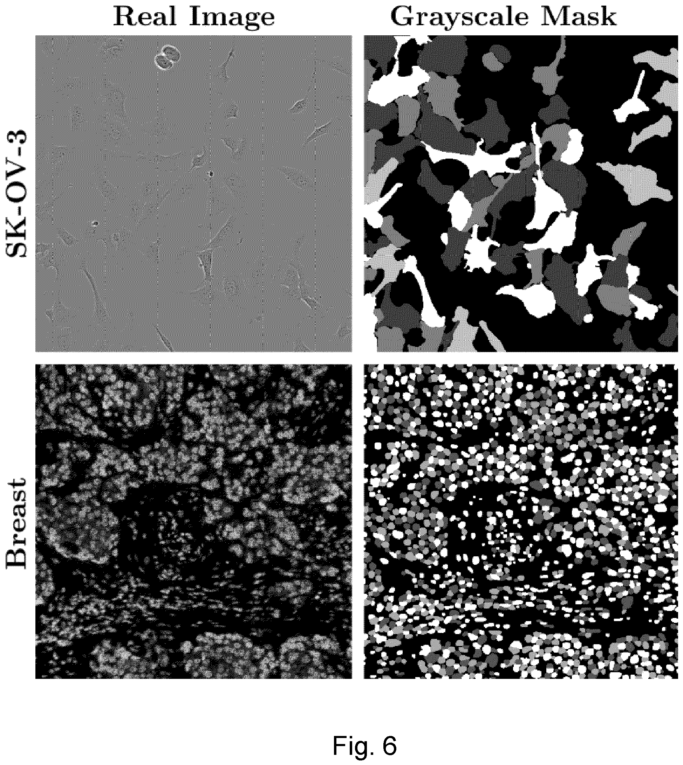

**Fig. 6** shows an output greyscale mask from each dataset. As described above, the main concern with the implementation was to ensure a significant contrast between overlapping objects, which is achieved by using the smallest number of labels possible since the greyscale spectrum is capped to 256. The first implementation considered every single cell, and no label cap, reaching a maximum of 11 labels. This made the generation produce masks where the objects blended with a smooth transition in the spectrum, which is not desired. However, the inventors observed that only a minority of the cells were labeled with high labels.

To reduce the graph complexity, the inventors assessed the possibility of using the edge weights to identify the cells that are most covered by their neighbors. The inventors found that removing them could break complex subgraphs into smaller ones and reduce the number of labels. By removing cells that are covered by a neighbor in more than 70% of its area, the number of labels was reduced from 11 to 7 in the LIVEcell data, while only reducing the number of annotated cells from 1,014,369 to 994,830, retaining ~ 98% of the total annotations. Furthermore, by capping the maximum label to four, a total of 984,963 cells are retained, corresponding to 97% of the whole dataset while ensuring improved label contrast.

A full comparison of label number vs. cell area overlap thresholds is provided in **Table 1A.** Data for the label number vs. cell number in the LIVEcell data is provided in **Table 1B** below. **Fig. 7** visualizes the cell loss and shows a clear reduction in benefit after around 4 labels. Table 1A shows the minimum number of labels required to capture each cell when applying o threshold, when applying a threshold of 90% area overlap (i.e. all cells with a total area covered at 90% by a single neighbour are removed) or 70% area overlap. Table 1B shows how many cells are removed with the thresholding, as well as the label distribution (i.e. how many cells have each label). This data is also visualized in **Fig. 7**, which shows that very few cells have labels over 5 under any thresholding scheme.

**Table 1A.** Minimum number of labels required to mark every cell in each cell type separately, for three different overlap thresholds.

| Cell type | No threshold | 90% | 70% |
| --- | --- | --- | --- |
| A172 | 8 | 7 | 7 |
| BT-474 | 7 | 7 | 5 |
| BV-2 | 9 | 7 | 6 |
| Huh7 | 7 | 6 | 6 |
| MCF7 | 7 | 6 | 6 |
| SH-SY5Y | 8 | 7 | 6 |
| SkBr3 | 9 | 7 | 5 |
| SK-OV-3 | 10 | 7 | 6 |

**Table 1B.** Number of cells lost for each combination of cell label number and overlap threshold caps.

| Cell label number | No threshold | 90% | 70% |
| --- | --- | --- | --- |
| 0 | 419141 | 417297 | 416913 |
| 1 | 326958 | 323238 | 322758 |
| 2 | 192746 | 188554 | 187673 |
| 3 | 63113 | 58664 | 57619 |
| 4 | 9370 | 6680 | 6135 |
| 5 | 2063 | 366 | 193 |
| 6 | 698 | 31 | 3 |
| 7 | 229 | 0 | 0 |
| 8 | 48 | 0 | 0 |
| 9 | 3 | 0 | 0 |
| Total | 1014369 | 994830 | 991294 |

The same implementation was applied to TissueNet with the difference of capping the number of labels to three, considering that nucleus overlapping is less likely than cell overlapping. This resulted in 802,941 annotated nuclei retained from 802,985, representing 99% of the total number of nuclei represented with only three labels.

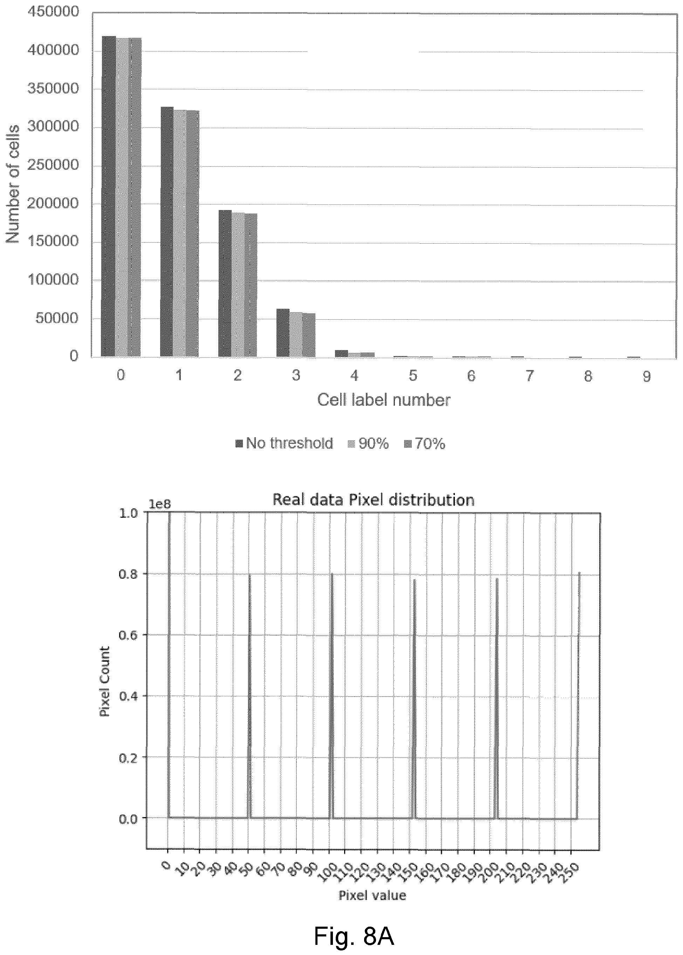

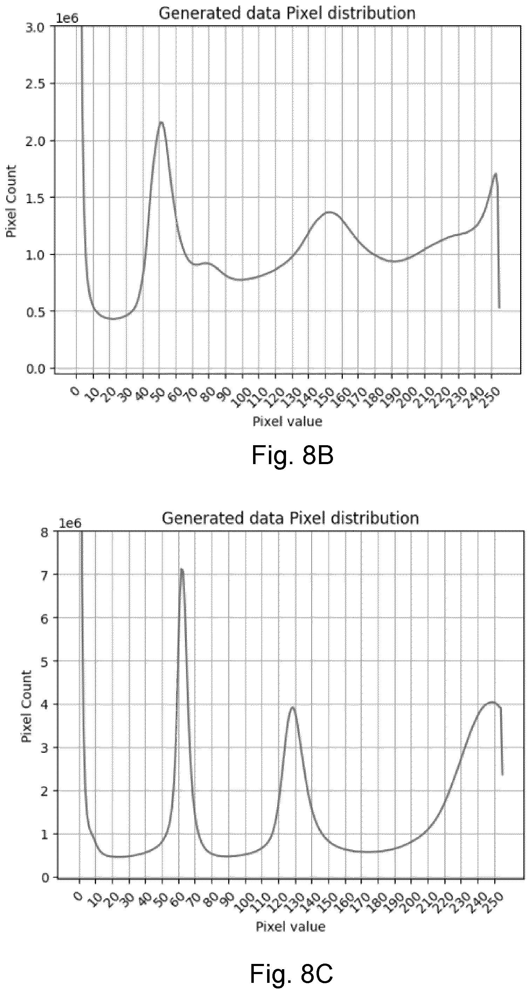

The inventors conclude therefore that applying the 70% thresholding approach came at the very marginal cost of maximum 3% of cell instances. The inventors postulated this this would significantly benefiting the network training. They therefore decided to continue with the 70% threshold data and assessed the quality of mask generation by inspecting the pixel distribution in generated images. This further emphasis the effect of thresholding and capping the number of labels on the quality of the segmented images generated. The real greyscale mask pixel distribution of LIVE Cell dataset with a label cap of the first 5 labels is shown on **Fig. 8A.** Cells with labels 5 or 6 were removed from the 70% thresholded data, totalling 196 of 1,014,369 cells (0.019% removed). Note that labels are numbered from 0 such that removing labels from 5 still results in 5 differnet labels being assigned to cells. The label 0 is not the same as assigning a pixel value of 0 - a pixel value of 0 is assigned to background pixels and all cell pixels are instead assigned a greyscale level associated with their label and selected evenly within the 0-255 range as shown on **Fig. 8A.** The resulting pixel distribution of the generated data with 5 labels after training produced the distribution shown in **Fig. 8B.** This shows that the model struggled to capture the same peaks as the real distribution, and instead produced peaks that do not correspond to the original data (such as the peak around 80). Because of this, the inventors decided to train the LIVEcell model using only 4 labels, expecting to have a higher contrast and allowing the model to better capture the original distribution. The results are presented in **Fig. 8C.**

The experiments were therefore continued with 4 labels. While, as shown in **Fig. 8C**, this produces only 3 peaks, the peaks are significantly better defined compared to the 5 label distribution peaks in **Fig. 8B**, and white objects (pixel value of 255) are clearly differentiable from the other pixel values. Based on this experience obtained from the LIVEcell data, the inventors used 3 labels for the TissueNet model (one fewer than for the LIVEcell adta since nuclei overlap is expected to be less frequent than cell overlap).

The inventors noted that this labelling approach can produce an imbalance in the label distribution. Isolated and initial nodes are assigned label zero, and the following connected nodes get a higher label as the subgraph gets deeper. This means that if no correction is made for this, more cells would be expected to be assigned label 0, than label 1, which themselves would be fewer than label 2, etc. (see e.g. Table 1B) Knowing the label cap from the thresholding mentioned earlier, The greyscale spectrum was divided into the total maximum number of labels, and those values were shuffled for each image separately (i.e. in each training image greyscale segmentation mask, cells assigned label 0 were assigned a single greyscale value that was randomly selected from the possible values defined by dividing the greyscale spectrum, cells assigned label 1 were assigned another single greyscale value selected randomly from this set, etc.). This produced a balanced pixel representation in the masks, avoiding any source of bias. In other words, while the label values distribution is heavily imbalanced because annotations always start from 0 (see **Fig.7**), the inventors modified the pixel values associated with the different classes between images to correct for this. This is possible because every label represents the same class (cell object), and therefore carries no meaning other than differentiating between overlapping objects. Therefore, in each subgraph that needs to be coloured with a gray value, the inventors shuffled the greyscale values so that every time 0 is initialized with a different greyscale value. This produced a very well-balanced pixel distribution in the whole dataset (as shown on **Fig. 8A**).

## B. Image Generation

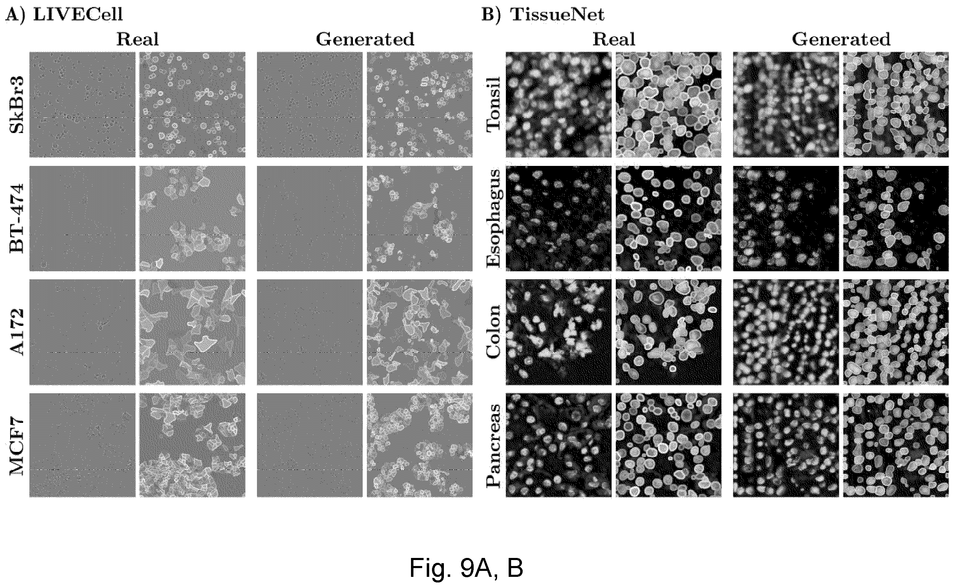

First, qualitative results of the generative model are presented and discussed by demonstrating a comparison of generated and real data samples. **Fig. 9** presents pairs of real and generated images from four cell classes of each dataset. Additionally, the real and generated masks are illustrated for each image, respectively.

The inventors first highlight the cell morphology differences between classes for both datasets. Starting with the LIVECell dataset, clear circular objects predominate the SkBr3 class, while more complex shapes are formed, e.g., in the A172 class. In contrast, the TissueNET dataset exposes similar shapes across classes. It is highlighted that in numerous instances, overlapping objects are present, as shown in the annotations. Regarding the generated samples, a clear agreement is observed between generated and real samples for both datasets and classes. Additionally, generated samples are characterized by a high degree of detail. More importantly, the synthetic masks captured most of the regions that were annotated in the original dataset; some cell types like BT-474 can have overpopulated regions where cells are indistinguishable (and not annotated by experts). The data demonstrates the potential of the GAN approach described herein to segment overlapping objects independently in the majority of cases.

Considering the quantitative evaluation, the FID and KID scores are reported for the proposed model trained and both datasets compared to baselines in **Table** 2. These scores reflect the average performance across all classes in each dataset. A limitation of FID is that it requires a large dataset to generate reliable probability distributions, making it unsuitable for individual cell type evaluation. To address this, the inventors also report the KID, which is more robust to smaller sample sizes. It is important to note that these scores are not directly comparable between datasets and should be interpreted with caution.

**Table 2.** Image generation FID and KID scores.

| Model | FID | KID |
|---|---|---|
| LiveCell Vanilla | 25.83 | 0.023 |
| LiveCell with Mask | 37.96 | 0.034 |
| TissueNet Vanilla | 87.83 | 0.049 |
| TissueNet with Mask | 153.15 | 0.173 |

Unfortunately, LIVECell and TissueNet datasets are not widely used for generative tasks, making it difficult to benchmark these metrics. These datasets, while rich in object annotations, are limited in terms of image count, unlike more commonly used generative model benchmarks. Additionally, existing generative studies in cell microscopy report high variability in FID and KID scores, due to the lack of standard benchmark datasets (Lesmes-Leon et al., 2023).

The inventors also trained unmodified baseline versions of StyleGAN2 to assess the impact of their modifications on image quality. Both datasets experienced a decrease in quality when trained to generate segmentation masks, underscoring the trade-off between image quality and annotated features. While the baselines produced unannotated images, the modified versions optimized resources by integrating mask generation, despite a slight reduction in image quality.

A key observation is the score disparity between datasets. LIVE Cell produced significantly lower FID and KID scores compared to TissueNet with both models. This difference can be attributed to the complexity and quality of TissueNet. Fluorescence microscopy, which generates RGB images, introduces more complexity due to the increased information content compared to the greyscale phase contrast images in LIVECell. However, TissueNet is not only smaller but also of lower quality, with background noise present in many training tiles, adversely affecting image quality. This is evident from the StyleGAN2 Vanilla experiment, where the model struggled to generate accurate images for lymph node metastasis cell types due to overfitting.

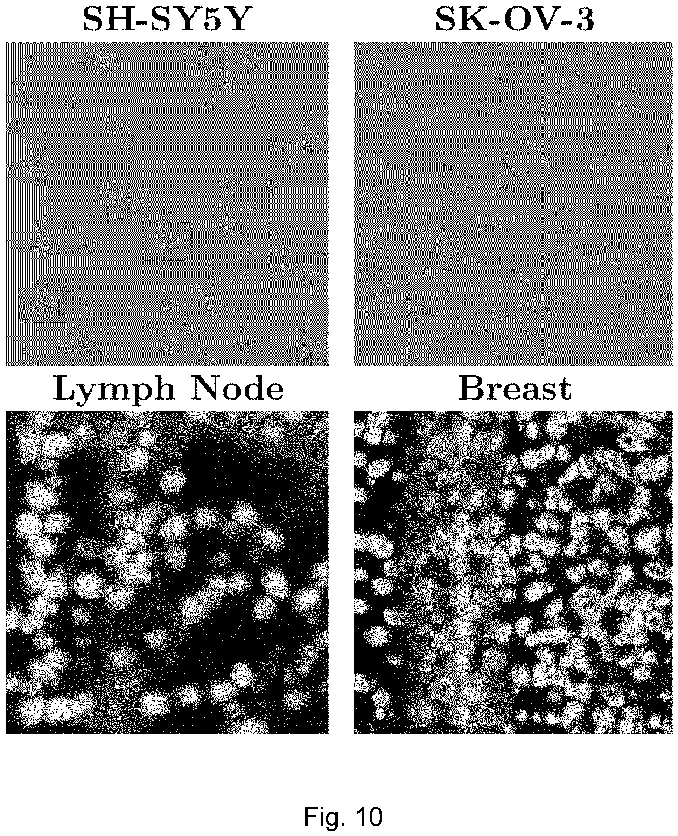

Although it is challenging to determine if the FID and KID scores are typical, as there are no comparable studies using these segmentation datasets for generative tasks, the inventors examined generated samples to identify potential sources of quality degradation. **Fig. 10** highlights some common artifacts observed in the generated images.

The inventors saw in the generation that the type and frequency of artifacts depend on a high degree of the cell type in the LIVECell dataset. As seen in **Fig. 10**, a recurrent artifact in SH-SY5Y is the presence of repetitive patterns in the images, which can be caused by the morphology variability of this cell type through time. Early SH-SY5Y images present round and small shapes forming overlapped clusters of around five cells. As time progresses, the circular shapes turn into irregular and elongated shapes, displaying cell maturation. Although the number of circular cells decreases, they are present most of the time step of the dataset, forming small clusters that might be overfitted to some degree by the generator. The inventors hypothesize this is due to the higher proportion of immature round cells than mature cells overall in the dataset, although LIVECell annotations do not contain information about the individual growth stage for further quantitative analysis. However, none of the generated images of this cell type is composed of only young cells, the predominant shape is the irregular and elongated one, suggesting that while the cluster shape formation may be overfitted, isolated round cells are underrepresented in the intraclass data.

On the other hand, it can be seen on Fig. 10 that the generator is producing overpopulated SK-OV-3 images, with a large degree of overlapping and ambiguous cell shapes. SK-OV-3 is a cell type that exhibits fast population growth because images start to get rapidly populated on the first day of sampling. Although the population of the early stages is not big enough to produce a high degree of overlapping, the generator seems to avoid generating images that resemble the early stage images. This is likely at least in part because the generator is not conditioned on time, so may be learning an average of the cell morphologies that occur over time. Because cell morphology and density varies dramatically over time in at least some cell types, this can result in a decrease in image quality that may not be present if the generation was conditioned on time or trained and tested for images that are less heterogeneous (e.g. only early, medium or late images in the case of the LIVECell dataset). This can be done using GANs given enough training data (e.g. using a class label that combines time and cell type information), or with the data available using more robust models such as diffusion models.

In the case of TissueNet, the inventors observed an irregular blue channel distribution. Cell types like breast and lymph nodes present vertical bands of blue on the left side of the image. Although this behavior is not present in all the cell types, it is still a common artifact for some of them.

The inventors further investigated the differences in FID between both datasets. They observed in the LIVECell-generated images that although the GAN can produce cells resembling real cell morphology, it cannot capture the entire morphology spectrum, producing a bias towards a few cell shapes. This is underlined in **Fig. 9A** in the BT-474 example, where the real image contains cells with different shapes and sizes, while the generated one contains small cells in most of the cases. There are cell types with high morphology variability like SH-SY5Y which has a round morphology in the early stage and develops in a neuron-like shape in the late stages, and cell types like BV-2 whose morphology is rather constant, but the cell density increases rapidly through time. Nonetheless, this was an expected behavior since the GAN architecture is conditioned solely on the cell type, ignoring completely the time constraint during training, possibly explaining the FID score. Contrarily, TissueNet achieved a worse FID score due to several possible reasons. In the first place, TissueNet is a smaller and more complex dataset than LIVECell considering that each image is in RGB. Hence, the inventors used as many images as possible, leading to a substantial class imbalance even with the augmentation approaches used. Specifically, the LIVECell dataset has roughly the same number of images per cell type, making it a class-balanced dataset, while TissueNet is highly variable in the number of images per class; some classes including >600 images and some <300. Nevertheless, it is argued that the main reason for the high FID score is the nature of the dataset. As mentioned earlier, TissueNet is a joint effort between various institutions where even the samples within the same class had different cell preparation, image acquisition, and post-processing, resulting in an increase in variability in image characteristics such as illumination, sampling device, and other artifacts that are not informative of the cell / tissue culture morphology that the model should be learning. Training datasets with higher variability in non-informative variables may need to be larger in size to compensate for deviations in experimental setup. The inventors believe that further pre-processing (e.g. including time information in the class label) and data quality evaluation will boost the generative performance.

C. Instance Segmentation

To evaluate the utility of the generated data samples, the inventors trained a segmentation network with augmented training data with different data schemes. The first experiment consisted of training a segmentation model with the whole LIVECell dataset and increasing progressively the number of generated samples for augmentation. The goal of this experiment was to see the impact of generated data during training. The results are presented in **Table 3.**

**Table 3.** Segmentation AP scores of whole LIVECell dataset and different numbers of generated images. AP - average precision.

| Model | LiveCell+0 generated images | LiveCell+1,600 generated images | LiveCell+3,200 generated images | LiveCell+6,400 generated images |
|---|---|---|---|---|
| **AP** | 47.69 | 47.26 | 47.11 | 46.79 |

Segmentation AP slightly decreased when incorporating generated data, with the level of degradation being proportional to the number of generated samples used. Previous research suggests that overrepresenting generated data can negatively affect model performance (Anaam et al., 2021), a trend confirmed here, where significantly increasing the ratio of generated to real samples impaired segmentation performance. Notably, there was no significant difference between augmenting with 1,600 and 3,200 generated samples. Consequently, the inventors proceeded with 3,200 generated samples in subsequent experiments to evaluate the extent to which real data could be substituted by generated data while maintaining or improving segmentation performance.

**Table 4** compiles the overall average precision (AP) scores from the segmentation model experiments. The results presented correspond to the baseline (no augmentation) scores and their difference w.r.t. the GAN-augmentation training in parentheses. Positive numbers reflect segmentation improvement with GAN-augmentation over the baseline (only real data vs percentage of real data expressed in each column).

**Table 4.** Segmentation average precision (AP) scores of non-augmented baseline with its difference against its augmented counterpart.

| Test data | Training scheme | | | | | | | |
|---|---|---|---|---|---|---|---|---|
| | **25%** | | **50%** | | **75%** | | **100%** | |
| **Full** | 45.36 | (-0.89) | 46.59 | (-0.89) | 47.59 | (-0.77) | 47.69 | (-0.48) |
| **A172** | 38.58 | (-0.78) | 38.77 | (-0.82) | **39.17** | **(+0.25)** | 39.97 | (-0.49) |
| **BT-474** | 40.86 | (-1.56) | 43.18 | (-1.83) | 44.41 | (-1.28) | 44.45 | (-0.48) |
| **BV-2** | 52.69 | (-0.86) | 53.93 | (-0.91) | 54.92 | (-0.95) | **54.69** | **(+0.02)** |
| **Huh7** | 52.12 | (-1.26) | 53.22 | (-1.57) | 53.06 | (-0.81) | 54.10 | (-0.58) |
| **MCF7** | 36.11 | (-1.30) | 37.84 | (-1.07) | 39.45 | (-1.40) | 39.35 | (-0.75) |
| **SH-SY5Y** | 23.92 | (-1.18) | 26.40 | (-2.24) | 26.70 | (-1.40) | 26.99 | (-1.08) |
| **SkBr3** | 66.13 | (-0.12) | **65.66** | **(+0.73)** | **66.44** | **(+0.60)** | 66.93 | (-0.01) |
| **SK-OV-3** | 53.40 | (-0.92) | 54.07 | (-0.65) | 54.57 | (-0.05) | 54.92 | (-0.53) |

Starting from the baseline results, the inventors observed two important characteristics to keep present during the analysis. First, it was found that the average AP improvement is inversely proportional to the train dataset size, with 1.17, 0.74, and 0.37 AP improvement in each dataset increase (25% -> 50%, 50% $\rightarrow$ 75%, and 75% $\rightarrow$ 100%, respectively; i.e. going from 25% to 50% led to 1.17 improvements, going from 50% to 75% led to 0.74 and going from 75% to 100% led to 0.37). As such, adding more data is beneficial but appears to provide diminishing returns. Although this behavior is expected in deep learning models, these results give meaningful insights into the capacity and scalability of this specific architecture, which would help to better understand the GAN-augmentation impact during training. Indeed, deep learning models do not scale linearly with data, they all have a cap. This means that even with an infinite number of images, deep learning models will have a limit in their performance, which is illustrated here. Second, the segmentation results per cell type allow us to evidence the complexity of each class in the dataset. High AP variability is seen through the classes, advising that BV-2 and SkBr3 are the easiest to differentiate, while SH-SY5Y is the most complex cell type to segment.

Regarding the GAN-augmentation, the inventors observed that in most of the cases, the AP segmentation scores slightly decreased with a significant detriment in the SH-SY5Y segmentation score (more than 1.08 in each training scheme) - although it did increase in some cases. Interestingly, three of the four setups where GAN-augmentation showed AP improvement were with the BV-2 and SkBr3 test datasets, with SkBr3 with the two highest improvements with +0.73 and +0.60 in the 50% and 75% training schemes, respectively. Both the baselines and the GAN-augmentation scores were similarly affected by the different cell types, meaning these results do not explain the source of segmentation impairment when applying data augmentation - both baseline and augmented models similarly struggled the most with SH-SY5Y and the least with BV-2 and SkBr3, suggesting that the generated data is not the cause of the overall poorer performance of these segmentation models. From this experimental setup, the inventors suggest two possible sources of impairment; GAN generalization, and generated segmentation mask fidelity.

Even though GANs have shown high-quality performance, they are known for instability during training and mode collapse (Wiatrak et al., 2020), a situation when the model produces low variability samples because it learned a limited number of modes. Mode collapse is a critical factor in the present experiments, considering that the models are conditioned on the cell type exclusively, neglecting the high intraclass variability given by the time and source dependency in the LIVECell and TissueNet datasets respectively. On the other hand, if the GAN captures all the modes, but fails to produce faithful segmentation, the capacity of the segmentation model would decrease due to inconsistencies between the real and generated annotations. The inventors therefore hypothesize that the model had two sources of segmentation impairmen:; low quality images due to mode collapse, and, in the case the model avoids mode collapse, failing to produce faithful segmentation masks.

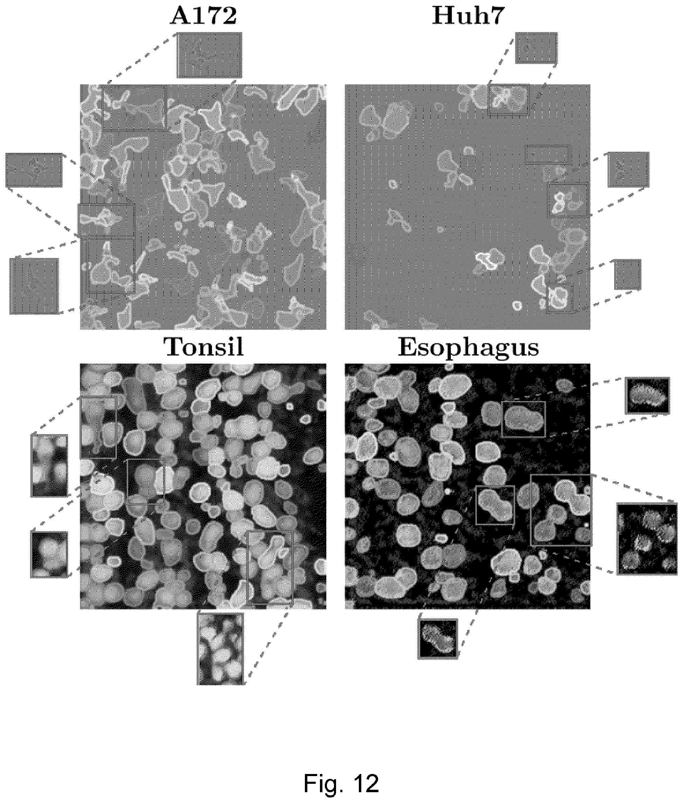

Regarding mask fidelity, **Fig. 12** depicts the segmentation mask artifacts produced by the present model. Here it can be seen how the masks present different artifacts depending on the dataset. Starting with the LIVECell dataset, the inventors observed that single-cell annotations get fragmented occasionally into different objects. This could occur because the frequent overlapping in the images confuses the generator since our mask implementation does not consider the overlapping regions. The greyscale mask distinguishes overlapping objects by assigning a specific greyscale value to each cell, but the covered region by the first cell is not considered by the mask because the second object is labeled on top. This is the main reason why the inventors' implementation removes those cells that are covered in more than 70% of its area. However, since the cells have a degree of transparency in this microscopy modality, overlapped regions have particular physical characteristics that the model could consider as an independent object, producing fragmentation, i.e. where single cells in the generated images are segmented into a cluster of multiple objects in the segmentation mask.

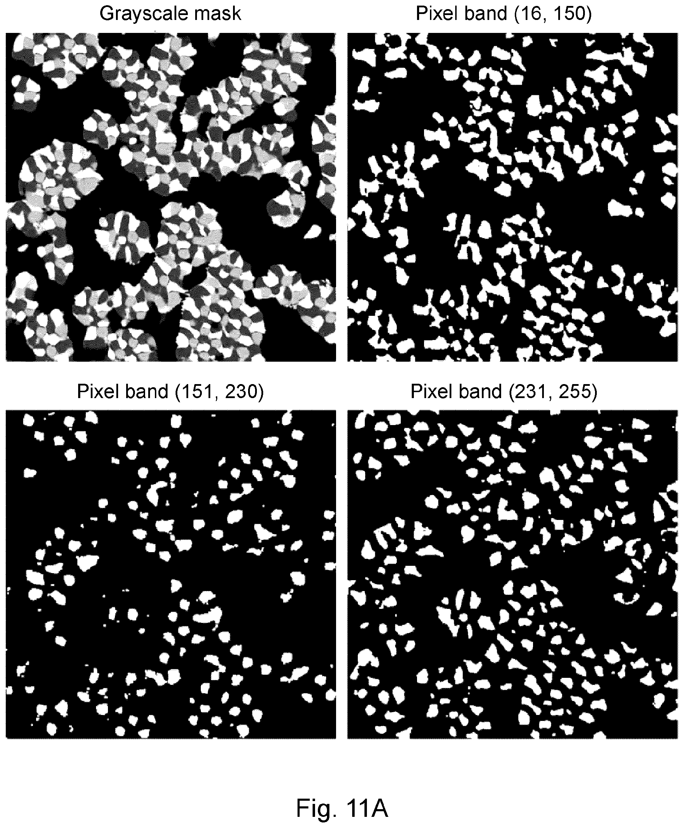

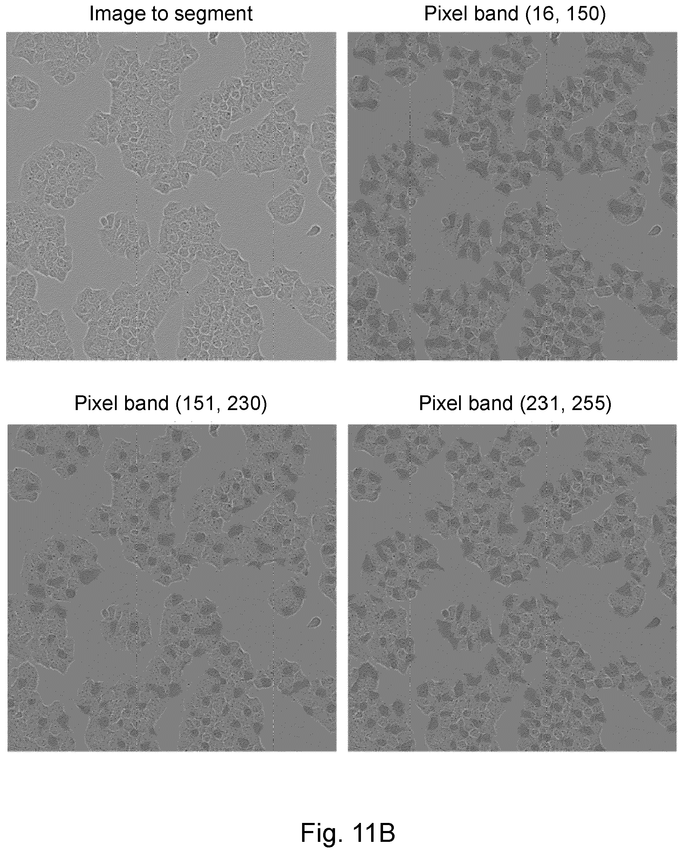

Additionally, the inventors observed that cells with a very small area are not being taken in the final mask (**Fig. 12** top right). This could be attributed to how the inventors extracted the final annotations from the generated greyscale mask. The generated greyscale mask contains continuous values from 0 to 255, as output from the tanh activation function, even though the greyscale masks in the training data only contain a limited set of discrete values in this range. In other words, the Tanh function returns a continuous signal, and even though the network is trained to produce values that approximate the real values from the training data, in practice some of the generated greyscale images can contain pixel values that did not appear in the training data (compare Fig. 8A - training data, and Fig. 8C - generated data). Therefore, the inventors used range filtering to generate a minimized set of discrete pixel bands. An example is provided in **Fig. 11.** When a greyscale mask is generated, the contours are extracted from all the greyscale bands in the images except for those annotations outside the real annotations area distribution, considering that the greyscale mask is produced by a tanh activation layer in the network, smoothing the edges and therefore increasing the chance of noise in the image. In other words, the inventors divided the pixel bandwidth into ranges (e.g., consider all pixel values that fall in the range 40 to 60 as pixel values associated with the pixel value 50 in the training data, etc.). Through this process, noise can be produced in terms of very small regions which are assigned to the pixel value 50 (because they have a pixel value in the range for that value, e.g. 40 to 60) but which do not in fact represent an object.To remove such noise, the inventors assessed the cell area distribution of real cells, and removed annotated synthetic objects that were outside of this observed distribution (i.e. objects that were smaller or larger than the expected size of the cells in the training images).

Different from the LIVE Cell dataset, the TissueNet generated masks display object annotation merging. The inventors attribute this behavior to image style variability, considering that images from different devices and sampling protocols could lead to fluctuations in contrast, brightness, intensity, and sharpness.

To further elucidate the influence of samples generated during the segmentation training, the inventors further split the test data based on time stages. Specifically, the inventors sought to understand the influence of time in LIVE Cell segmentation by dividing the samples into three-time stages. For this, the inventors explored the sample time distribution of each cell type independently and divided the samples into three evenly separated time slots, resulting in early, mid, and late cell development time stages. It was expected that this partition gives an insight into how well both the GAN and segmentation models are capable of generalizing throughout the whole data. Results are presented in **Table 5.**

**Table 5A.** LIVECell time data split AP segmentation scores of non-augmented baseline with its difference against its augmented counterpart. 25% and 50% real data schemes.

| Scheme | 25% | | | 50% | | |
|---|---|---|---|---|---|---|
| Test data | Early | Mid | Late | Early | Mid | Late |
| Full | 55.31 (-0.43) | 43.60 (-0.73) | 37.00 (-1.51) | 56.35 (-0.61) | 44.91 (-0.83) | 38.42 (-1.32) |
| A172 | 54.07 (-0.19) | 43.12 (-1.06) | 31.29 (-0.55) | 56.49 (-2.25) | 44.90 (-2.05) | **29.82 (+0.61)** |
| BT-474 | 52.66 (-0.46) | 37.71 (-1.87) | 35.47 (-1.75) | 55.42 (-1.57) | 40.27 (-1.97) | 37.56 (-1.89) |
| BV-2 | **66.26 (+1.01)** | 59.31 (-0.30) | 48.80 (-1.15) | 38.86 (-2.44) | **59.34 (+0.27)** | 50.34 (-1.03) |
| Huh7 | 56.57 (-0.95) | 52.34 (-1.43) | 47.33 (-1.49) | 1 58.23 (-2.17) | 53.21 (-1.03) | 48.15 (-1.56) |
| MCF7 | **52.50 (+0.13)** | 39.60 (-0.40) | 30.90 (-1.69) | **54.29** (+0.35) | 42.56 (-1.69) | 32.09 (-0.90) |
| SH-SY5Y | 33.35 (-1.52) | 22.41 (-1.19) | 22.86 (-0.47) | 36.15 (-2.65) | 25.10 (-2.20) | 25.66 (-2.20) |
| SkBr3 | **74.05 (+0.48)** | 68.68 (-1.23) | 61.77 (**+0.38**) | 73.23 (**+1.64**) | **65.69 (+2.14)** | 63.61 (-1.05) |
| SK-OV-3 | 60.83 (-0.98) | 56.00 (-0.88) | 49.76 (-0.56) | 62.04 (-1.39) | 57.13 (-1.13) | **49.98 (+0.04)** |

**Table 5B.** LIVECell time data split AP segmentation scores of non-augmented baseline with its difference against its augmented counterpart. 75% and 100% real data schemes.

| Scheme | 75% | | | 100% | | |
|---|---|---|---|---|---|---|
| Test data | Early | Mid | Late | Early | Mid | Late |
| Full | 57.03(-0.33) | 46.00 (-0.78) | 39.44(-1.12) | 57.31 (-0.26) | 46.00(-0.64) | 39.66(-0.68) |
| A172 | 55.46(-0.36) | **44.69 (+0.08)** | **31.24(+0.37)** | **55.89(+0.13)** | 45.30(-0.73) | 32.19(-0.54) |
| BT-474 | 55.64(-0.44) | 41.83 (-1.79) | 39.34(-1.76) | **55.75(+0.04)** | 41.69(-0.80) | 39.15(-0.45) |
| BV-2 | 68.73(-0.80) | 60.99 (-0.26) | 51.08(-1.17) | 67.71 (+0.00) | **60.72(+0.47)** | 51.06(-0.26) |
| Huh7 | 58.68(-1.31) | 52.46 (-0.86) | 48.41 (-0.51) | **58.32(+0.16)** | 54.13(-0.97) | 49.87(-0.59) |
| MCF7 | 55.58(-0.31) | 43.87 (-1.67) | 33.97(-1.59) | 56.43(-0.97) | 43.33(-0.52) | 33.88(-0.76) |
| SH-SY5Y | 36.41 (-2.68) | 25.80 (-1.91) | 25.90(-0.76) | 36.33(-0.37) | 25.98(-1.59) | 26.13(-1.08) |
| SkBr3 | **74.56(+1.20)** | **67.48 (+0.76)** | 63.30(-0.21) | 75.49(-0.57) | **68.17(+0.41)** | 63.33(-0.52) |
| SK-OV-3 | **61.59(+0.32)** | 57.55 (-0.38) | **50.82(+0.14)** | **62.42(+0.11)** | 57.85(-0.67) | 51.23(-0.40) |

The first evident result from this experiment is the confirmation of the high inter-class variability of the data. The baselines show significant AP fluctuations across the time stages in each training scheme. The baseline scores tend to be higher in the early stage and decrease in the late stage. This variability heavily depends on the cell type, and in extreme cases, the data show impairments over 10 points for some cell types in each training scheme. As mentioned earlier in the FID results, this segmentation score variability is attributed to the cell morphology and density. A number of cell types were identified where AP scores change significantly over time, such as A172, MCF7, BT-474, and SH-SY5Y. Interestingly, the variability of A172 and MCF7 are rather constant while the variability of BT-474, and SH-SY5Y is high between the early and mid-stages but low between the mid and late stages, suggesting kinetics is also an important factor to keep in mind in the experiments. In this situation, the inventors hypothesize that individual cell type kinetics could impact the images in two ways: cell morphology change, and cell density in the image. A specific cell type could have a rapid morphology change with low increase in population, the opposite, or both simultaneously. Nonetheless, these results are not enough to conclude if the kinetics impact is due to the morphology change speed or the cell density in the images.

On the other hand, the inventors found that their GAN-augmentation approach boosted the performance in 22 cases, with at least one boost in each cell type except for SH-SY5Y. There is a clear tendency of improvement towards the early and mid-stages (with 11 early and six mid-cases), showing the GAN tendency to learn data distribution from the first half of the time stages in the data; a reasonable result considering that young cells will be present independently of the time of sampling due to the cell duplication process. Moreover, similar to the results of **Table 4**, SkBr3 was the cell type that exploited the augmentation benefits the most. The inventors hypothesize that, based on the two tested variables of cell type and time, SkBr3 is therefore likely the most stable in terms of intraclass variability over time. From the nine splits, seven cases showcased any type of segmentation improvement with the highest two in the mid and early stages respectively of the 50% training schemes, reaching a maximum of +2.14 boost in the mid-stage.

These results demonstrates that the proposed GAN architecture produces faithful segmentation masks. although it struggles in some cases to generalize with the data. Firstly, there is a significant difference in the improvements between the early and late stages, caused by the inter-class variability. Secondly, there is stable segmentation improvement with SkBr3, a cell type with one of the most stable morphologies in the LIVECell dataset.

Generative models can produce well-defined segmentation masks at a low additional cost, and more powerful models with further conditioning could overcome the limitations of the inventors' architecture. The results in **Table 5** emphasize the importance of conditioning during training, as the most time-independent cell types were better represented by the inventors' architecture (e.g., SkBr3 or BV-2). Nevertheless, the data herein show that data augmentation with synthetic data as described herein is valuable provided that appropriate training data (or conditioning in combination with sufficient amounts of data per class) is available for the specific use case.

## IV. Conclusion

The inventors present herein a generative model for synthesizing annotated cell microscopy images. The inventors showcase the potential of this generative model to produce synthetic data with their respective instance segmentation annotations with low effort. The approach described herein shows how generative models learn meaningful segmentation-related features during training, without additional constraints. The inventors anticipate that the general approach described herein can be expanded to more powerful generative models, such as Diffusion models or regularization techniques, which will increase the possibilities to produce higher quality annotated data.

## References

A number of publications are cited above in order to more fully describe and disclose the invention and the state of the art to which the invention pertains. Full citations for these references are provided below. The entirety of each of these references is incorporated herein.

D. P. Kingma and M. Welling, "Auto-encoding variational bayes," in 2nd International Conference on Learning Representations, ICLR 2014, Banff, AB, Canada, April 14-16, 2014, Conference Track Proceedings, Y. Bengio and Y. LeCun, Eds., 2014. [Online]. Available: arxiv.org/abs/1312.6114

I. Goodfellow, J. Pouget-Abadie, M. Mirza, B. Xu, D. Warde-Farley, S. Ozair, A. Courville, and Y. Bengio, "Generative Adversarial Nets," in Advances in Neural Information Processing Systems, Z. Ghahramani, M. Welling, C. Cortes, N. Lawrence, and K. Q. Weinberger, Eds., vol. 27. Curran Associates, Inc., 2014.

A. Q. Nichol and P. Dhariwal, "Improved Denoising Diffusion Probabilistic Models," in Proceedings of the 38th International Conference on Machine Learning. PMLR, Jul. 2021, pp. 8162-8171.

D. N. Lesmes-Leon, A. Dengel, and S. Ahmed, "Generative adversarial networks in cell microscopy for image augmentation. A systematic review," p. 2023.08.25.554841, Aug. 2023.

R. Sharma, M. Saqib, C. T. Lin, and M. Blumenstein, "A Survey on Object Instance Segmentation," SN Computer Science, vol. 3, no. 6, p. 499, Sep. 2022.

L. Han, R. F. Murphy, and D. Ramanan, "Learning Generative Models of Tissue Organization with Supervised GANs," in IEEE Winter Conference on Applications of Computer Vision. IEEE Winter Conference on Applications of Computer Vision, vol. 2018, Mar. 2018, pp. 682-690.

P. Dimitrakopoulos, G. Sfikas, and C. Nikou, "ISING-GAN: Annotated Data Augmentation with a Spatially Constrained Generative Adversarial Network," in 2020 IEEE 17th International Symposium on Biomedical Imaging (ISBI), Apr. 2020, pp. 1600-1603.

K. Shaga Devan, P. Walther, J. von Einem, T. Ropinski, H. A. Kestler, and C. Read, "Improved automatic detection of herpesvirus secondary envelopment stages in electron microscopy by augmenting training data with synthetic labelled images generated by a generative adversarial network," Cellular Microbiology, vol. 23, no. 2, p. e13280, 2021.

R. Abdal, P. Zhu, N. J. Mitra, and P. Wonka, "Labels4Free: Unsupervised Segmentation Using StyleGAN," in Proceedings of the IEEE/CVF International Conference on Computer Vision, 2021, pp. 13 970-13 979.

A. Toker, M. Eisenberger, D. Cremers, and L. Leal-Taix6, "SatSynth: Augmenting Image-Mask Pairs through Diffusion Models for Aerial Semantic Segmentation," Mar. 2024.

T. Karras, S. Laine, M. Aittala, J. Hellsten, J. Lehtinen, and T. Aila, "Analyzing and improving the image quality of stylegan," in Proceedings of the IEEE/CVF Conference on Computer Vision and Pattern Recognition. IEEE Computer Society, 2020, pp. 8110-8119.

W. Dee, R. A. Ibrahim, and E. Marouli, "Histopathological Domain Adaptation with Generative Adversarial Networks Bridging the Domain Gap Between Thyroid Cancer Histopathology Datasets," May 2023.

A. Mascolini, D. Cardamone, F. Ponzio, S. Di Cataldo, and E. Ficarra, "Exploiting generative self-supervised learning for the assessment of biological images with lack of annotations," BMC Bioinformatics, vol. 23, no. 1, p. 295, Jul. 2022.

C. Edlund, T. R. Jackson, N. Khalid, N. Bevan, T. Dale, A. Dengel, S. Ahmed, J. Trygg, and R. Sjo¨gren, "LIVECell-A large-scale dataset for label-free live cell segmentation," Nature Methods, vol. 18, no. 9, pp. 1038-1045, Sep. 2021.

N. F. Greenwald, G. Miller, E. Moen, A. Kong, A. Kagel, T. Dougherty, C. C. Fullaway, B. J. McIntosh, K. X. Leow, M. S. Schwartz, C. Pavelchek, S. Cui, I. Camplisson, O. Bar-Tal, J. Singh, M. Fong, G. Chaudhry, Z. Abraham, J. Moseley, S. Warshawsky, E. Soon, S. Greenbaum, T. Risom, T. Hollmann, S. C. Bendall, L. Keren, W. Graf, M. Angelo, and D. Van Valen, "Whole-cell segmentation of tissue images with human-level performance using large-scale data annotation and deep learning," Nature Biotechnology, vol. 40, no. 4, pp. 555-565, Apr. 2022.

T. Lin, M. Maire, S. J. Belongie, L. D. Bourdev, R. B. Girshick, J. Hays, P. Perona, D. Ramanan, P. Doll'a r, and C. L. Zitnick, "Microsoft COCO: common objects in context," CoRR, vol. abs/1405.0312, 2014. [Online]. Available: arxiv.org/abs/1405.0312

M. Kang, W. Shim, M. Cho, and J. Park, "Rebooting ACGAN: Auxiliary Classifier GANs with Stable Training," in Advances in Neural Information Processing Systems, vol. 34. Curran Associates, Inc., 2021, pp. 23 505-23 518.

A. Odena, C. Olah, and J. Shlens, "Conditional Image Synthesis with Auxiliary Classifier GANs," in Proceedings of the 34th International Conference on Machine Learning. PMLR, Jul. 2017, pp. 2642-2651.

M. Heusel, H. Ramsauer, T. Unterthiner, B. Nessler, and S. Hochreiter, "GANs Trained by a Two Time-Scale Update Rule Converge to a Local Nash Equilibrium," in Advances in Neural Information Processing Systems, vol. 30. Curran Associates, Inc., 2017.

C. Szegedy, V. Vanhoucke, S. Ioffe, J. Shlens, and Z. Wojna, "Rethinking the Inception Architecture for Computer Vision," in 2016 IEEE Conference on Computer Vision and Pattern Recognition (CVPR), Jun. 2016, pp. 2818-2826.

J. Deng, W. Dong, R. Socher, L.-J. Li, K. Li, and L. Fei-Fei, "ImageNet: A large-scale hierarchical image database," in 2009 IEEE Conference on Computer Vision and Pattern Recognition. Ieee, Jun. 2009, pp. 248- 255.

A. Borji, "Pros and cons of GAN evaluation measures," Computer Vision and Image Understanding, vol. 179, pp. 41-65, Feb. 2019.

M. Kang, J. Shin, and J. Park, "StudioGAN: A Taxonomy and Benchmark of GANs for Image Synthesis," IEEE Transactions on Pattern Analysis and Machine Intelligence, vol. 45, no. 12, pp. 15725-15742, Dec. 2023.

S. Zhao, Z. Liu, J. Lin, J.-Y. Zhu, and S. Han, "Differentiable Augmentation for Data-Efficient GAN Training," in Advances in Neural Information Processing Systems, vol. 33. Curran Associates, Inc., 2020, pp. 7559-7570.

T. Karras, M. Aittala, J. Hellsten, S. Laine, J. Lehtinen, and T. Aila, "Training Generative Adversarial Networks with Limited Data," in Advances in Neural Information Processing Systems, vol. 33. Curran Associates, Inc., 2020, pp. 12 104-12 114.

L. Jiang, B. Dai, W. Wu, and C. C. Loy, "Deceive D: Adaptive Pseudo Augmentation for GAN Training with Limited Data," in Advances in Neural Information Processing Systems, vol. 34. Curran Associates, Inc., 2021, pp. 21 655-21 667.

M. Wiatrak, S. V. Albrecht, and A. Nystrom, "Stabilizing Generative Adversarial Networks: A Survey," Mar. 2020.

Tero Karras, Samuli Laine, and Timo Aila. A style-based generator architecture for generative adversarial networks. In Proc. CVPR, 2018.

Karras, Tero; Aila, Timo; Laine, Samuli; Lehtinen, Jaakko (October 1, 2017). "Progressive Growing of GANs for Improved Quality, Stability, and Variation". arXiv:1710.10196

Karras, Tero; Laine, Samuli; Aila, Timo (June 2019). "A Style-Based Generator Architecture for Generative Adversarial Networks". 2019 IEEE/CVF Conference on Computer Vision and Pattern Recognition (CVPR). IEEE. pp. 4396-4405. arXiv:1812.04948

Tero Karras, Miika Aittala, Samuli Laine, Erik Härkönen, Janne Hellsten, Jaakko Lehtinen, Timo Aila (June 23, 2021). Alias-Free Generative Adversarial Networks. arXiv:2106.12423v4

Zargari, Abolfazl et al. Enhanced cell segmentation with limited training datasets using cycle generative adversarial networks. iScience, Volume 27, Issue 5, 109740

Binkowski, M., Sutherland, D. J., Arbel, M., and Gretton, A. (2018). Demystifying MMD gans. In 6th International Conference on Learning Representations, ICLR 2018, Vancouver, BC, Canada, April 30 - May 3, 2018, Conference Track Proceedings. OpenReview.net.

Ho J, Jain A., Abbeel P. Denoising Diffusion Probabilistic Models. arXiv:2006.11239v2. 16 Dec 2020.

Anaam et al. 2021. Studying the Applicability of Generative Adversarial Networks on HEp-2 Cell Image Augmentation. IEEE Access, 9:98048-98059.

**Claims**

1. A computer-implemented method of generating segmented cell microscopy images, the method comprising:

   providing a random noise vector as input to a deep learning model that has been trained to take as input a random noise vector and produce as output a cell microscopy image and a corresponding segmentation mask,
   wherein the deep learning model has been trained using training data comprising a plurality of pairs of real cell microscopy images and corresponding greyscale segmentation masks,
   wherein a greyscale segmentation mask is a mask where each pixel of each segmented object is assigned a pixel value selected for the segmented object from a predetermined set of pixel values, wherein the selected pixel values are such that no two overlapping segmented objects are assigned the same predetermined pixel value, and the number of pixel values in the predetermined set of pixel values is the smallest number that can be used while fulfilling the condition that no two overlapping segmented objects are assigned the same predetermined pixel value.

2. The method of claim 1, wherein the deep learning model is configured to jointly generate both the cell microscopy image and a corresponding segmentation mask, and/or wherein the deep learning model is configured to generate a single output comprising concatenated values representing the cell microscopy image and the corresponding segmentation mask.

3. The method of any preceding claim, wherein the deep learning model is a generator of a generative adversarial network, or a denoising network of a diffusion model, and/or wherein the deep learning model is a model derived from the StyleGAN architecture and/or wherein the deep learning model is a generator of a generative adversarial network trained to perform conditional generation,

optionally wherein the deep learning model is a model derived from the StyleGAN architecture in which each tRGB block in the generator has been replaced by a 2D modulated convolutional layer, and/or wherein the deep learning model is a generator of a generative adversarial network that uses a classifier network to condition image generation.

4.  The method of any preceding claim, wherein the deep learning model is a conditional generative model, wherein the deep learning model further takes as input one or more class labels and wherein the training data comprises a plurality of pairs of real cell microscopy images and corresponding one or more greyscale segmentation masks each associated with one or more class labels, optionally wherein a class label is a label that identifies one or more of: the type(s) of cells, cellular structures or tissues in the sample from which a cell microscopy image has been obtained, metadata associated with the sample processing that has been applied to the sample prior to imaging, and metadata associated with the imaging process used to obtain the cell microscopy image.

5.  The method of any preceding claim, wherein a cell microscopy image is a 2D microscopy image, and/or an optical microscopy image, or a fluorescence image, optionally wherein an optical microscopy image is a brightfield or phase contrast microscopy image; and/or wherein a segmentation mask identifies the location of a plurality of segmented cellular structures, wherein cellular structures are selected from: cells, organelles, or any other localized subcellular structure that can be visualized using cell microscopy imaging.

6.  The method of any preceding claim, wherein a greyscale segmentation mask for each training image has been obtained from a segmentation mask identifying the location of each of a plurality of segmented objects by:

    creating a directed graph where each segmented object is represented as a node in the graph, and two nodes are connected by an edge if the segmented objects overlap with each other; and

    assigning a selected pixel value to each node of the directed graph from a predetermined set of pixel values, wherein the selected pixel value is such that no two connected nodes in the graph are assigned the same predetermined pixel value, and the number of pixel values in the predetermined set of pixel values is the smallest number that can be used while fulfilling the condition that no two connected nodes are assigned the same predetermined pixel value.

7.  The method of claim 6, wherein the directed graph is a weighted directed graph, where:

    (i) the weight of each edge in the graph is proportional to the degree of overlap between the segmented objects associated with the nodes connected by the edge, and/or

    (ii) the weight of an edge $u \rightarrow v$ between node $u$ as a source node and node $v$ as a target node was calculated as the area percentage of the segmented object associated with node $u$ that is covered by the segmented object associated with node $v$, optionally wherein this area percentage was estimated by dividing the intersection of the area of the segmented object associated with node $u$ and the area of the segmented object associated with node v over the total area of the segmented object associated with node $u$.

8.  The method of claim 6 or claim 7, wherein the step of assigning a selected pixel value to each node of the directed graph from a predetermined set of pixel values was performed by traversing connected subgraphs of the graph, optionally using a breadth-first-search algorithm, and selecting for each newly visited node a label from a queue of labels, ensuring that connected nodes are not assigned the same label, and optionally that a newly visited node is assigned the label that is the earliest label in the queue of labels that differs from the labels already assigned to nodes connected to the newly visited node, wherein each label in the queue of labels is associated with a predetermined pixel value.

9.  The method of claim 8, wherein the pixel values associated with the labels in the queue were selected from a predetermined set of pixel values common across all images of a set of training cell microscopy images, the queue of labels was common across all images of a set of training cell microscopy images, and the order of the predetermined set of pixel values associated with each label in the queue was randomly shuffled for each training cell microscopy image or each connected subgraph in each training cell microscopy image.

10.  The method of any of claims 6 to 9, wherein the directed graph has been filtered by removing all nodes corresponding to objects that have a degree of overlap above a predetermined threshold, or wherein the directed graph is a weighted directed graph, where the weight of each edge in the graph is proportional to the degree of overlap between the segmented objects associated with the nodes connected by the edge and the graph has been filtered by removing all nodes that have an incoming edge with a weight above a predetermined threshold.

11. The method of any preceding claims, wherein the set of predetermined pixels values are selected as boundaries of equal size subranges of a total range corresponding to the range of the greyscale channel, the number of subranges corresponding to the number of predetermined pixel values in the set, and/or wherein the deep learning model has been trained to take as input a random noise vector and produce as output a cell microscopy image and a corresponding segmentation mask in which pixels are assigned continuous values and wherein the method further comprises applying range filtering to the segmentation mask produced by the deep learning model to select pixel values within respective predetermined ranges associated with each of the respective predetermined pixel values, wherein pixels within a predetermined range are considered to be associated with the predetermined pixel value that is associated with the predetermined range, optionally wherein the method further comprises obtaining a processed segmentation mask in which each of the selected pixels in the segmentation mask output by the deep learning model is associated with the predetermined pixel value of the predetermined range associated with the pixel value output by the deep leaning model.

12. The method of any of claims 6 to 11, wherein the directed graph has been filtered by removing all nodes that are assigned a label that is at or above a predetermined rank in the queue of labels.

13. A computer-implemented method of training a machine learning model for segmentation of cellular structures in cell microscopy images, the method comprising:

> obtaining synthetic images using the method of any of claims 1 to 12; and
> training a segmentation machine learning model using a training data set comprising the obtained synthetic images, optionally wherein the training data set also comprises real cell microscopy images and associated segmentation masks.

14. A computer-implemented method of training a deep learning model to generate segmented cell microscopy images, the method comprising:

> obtaining a training dataset comprising a plurality of pairs of real cell microscopy images and corresponding greyscale segmentation masks, wherein a greyscale segmentation mask is a mask where each pixel of each segmented object is assigned a pixel value selected for the segmented object from a predetermined set of pixel values, wherein the selected pixel values are such that no two overlapping segmented objects are assigned the same predetermined pixel value, and the number of pixel values in the predetermined set of pixel values is the smallest number that can be used while fulfilling the condition that no two overlapping segmented objects are assigned the same predetermined pixel value; and
> training a deep learning model, using said training dataset to take as input a random noise vector and produce as output a cell microscopy image and a corresponding segmentation mask.

15. A system including: at least one processor; and at least one non-transitory computer readable medium containing instructions that, when executed by the at least one processor, cause the at least one processor to implement the method of any of claims 1 to 14.

| Input random noise vector into deep learning model | — 10 |

| Input class label(s) into deep learning model | — 12 |

| Generate segmented cell microscopy image(s) using deep learning model | — 14 |

| Image and masks are separated | — 16 |

Process generated greyscale masks

Select pixels within ranges 18A
Assign discrete values to selected pixels 18B
Remove segmented objects with size outside predetermined range  18C

— 18

| Provide results to user | — 20 |

| Train machine learning model for segmentation of cellular structures using obtained synthetic images | — 22 |

Fig. 1A

Obtain training dataset comprising a plurality of pairs of real cell
microscopy images and corresponding greyscale segmentation masks

Obtain pairs of real cell microscopy images and binary masks — 210A

Create directed graph where each segmented object in binary
mask is a node and edges connect overlapping objects — 210B

Filter directed graph to remove nodes of segmented objects
with overlap above threshold — 210C

Assign a label to each node in graph — 210D

Filter graph to remove nodes with labels of rank above
threshold — 210E

Associate predetermined pixel value to each label — 210F

210

Obtain class label for each segmentation mask — 220

Train deep learning model — 230

Output trained model — 240

Fig. 1B

## Fig. 2

---

**Algorithm 1** Grayscale Mask generation.

---

1: **Input:** $COCO\text{-}annotations,\ threshold,\ label\text{-}cap$

2: **function** BUILDGRAPH($COCO\text{-}annotations$,
$\qquad\qquad\qquad\qquad threshold,\ label\text{-}cap$)

3: $\qquad$ Graph $G \leftarrow \varnothing$

4: $\qquad$ **for** each Cell $u \in COCO\text{-}annotations$ **do**

5: $\qquad\qquad$ **for** each Cell $v \in COCO\text{-}annotations - \{u\}$ **do**

6: $\qquad\qquad\qquad w \leftarrow \dfrac{u \cap v}{u}$

7: $\qquad\qquad\qquad$ **if** $w > 0$ **then**

8: $\qquad\qquad\qquad\qquad$ AddEdge($G, u, v, w$)

9: $\qquad\qquad\qquad$ **end if**

10: $\qquad\qquad$ **end for**

11: $\qquad$ **end for**

12: $\qquad$ **for** each Node $n \in G$ **do**

13: $\qquad\qquad$ **if** $\max(n.out\_edges) > threshold$ **then**

14: $\qquad\qquad\qquad$ DeleteNode($G, n$)

15: $\qquad\qquad$ **end if**

16: $\qquad$ **end for**

17: $\qquad$ FloodFill($G, label\text{-}cap$) $\qquad\qquad$ ▷ With modified BFS.

18: **end function**

---

## Fig. 3

Fig. 4

Fig. 5

Real Image    Grayscale Mask

SK-OV-3

Breast

Fig. 6

Fig. 8A

Fig. 8B

Fig. 8C

Fig. 9A, B

SH-SY5Y                          SK-OV-3

Lymph Node                       Breast

Fig. 10

Fig. 11A

Image to segment

Pixel band (16, 150)

Pixel band (151, 230)

Pixel band (231, 255)

Fig. 11B

Fig. 12

Europäisches
Patentamt

European
Patent Office

Office européen
des brevets

## EUROPEAN SEARCH REPORT

**Application Number**

EP 24 21 1832

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEONGHUI MIN ET AL: "Co-synthesis of Histopathology Nuclei Image-Label Pairs using a Context-Conditioned Joint Diffusion Model", ARXIV.ORG, CORNELL UNIVERSITY LIBRARY, 201 OLIN LIBRARY CORNELL UNIVERSITY ITHACA, NY 14853, 19 July 2024 (2024-07-19), XP091827390, * the whole document * | 1-15 | INV. G06T7/11 G06T7/162 |
| A | YU XINYI ET AL: "Diffusion-Based Data Augmentation for Nuclei Image Segmentation", 1 October 2023 (2023-10-01), MEDICAL IMAGE COMPUTING AND COMPUTER ASSISTED INTERVENTION - MICCAI 2023; [LECTURE NOTES IN COMPUTER SCIENCE; LECT.NOTES COMPUTER], SPRINGER NATURE SWITZERLAND, CHAM, PAGE(S) 592 - 602, XP047671427, ISSN: 0302-9743 ISBN: 978-3-031-43992-6 [retrieved on 2023-10-01] * the whole document * | 1-15 | |
| A | BAILO OLEKSANDR ET AL: "Red Blood Cell Image Generation for Data Augmentation Using Conditional Generative Adversarial Networks", 2019 IEEE/CVF CONFERENCE ON COMPUTER VISION AND PATTERN RECOGNITION WORKSHOPS (CVPRW), IEEE, 16 June 2019 (2019-06-16), pages 1039-1048, XP033747205, DOI: 10.1109/CVPRW.2019.00136 [retrieved on 2020-03-04] * the whole document * | 1-15 | |

**TECHNICAL FIELDS SEARCHED (IPC)**

G06T

-/--

The present search report has been drawn up for all claims

| Place of search | Date of completion of the search | Examiner |
|---|---|---|
| Munich | 27 March 2025 | Kollreider, Klaus |

EPO FORM 1503 03.82 (P04C01)

page 1 of 2

Europäisches Patentamt

European Patent Office

Office européen des brevets

# EUROPEAN SEARCH REPORT

**Application Number**

EP 24 21 1832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TASNADI ERVIN ET AL: "Structure preserving adversarial generation of labeled training samples for single-cell segmentation", CELL REPORTS METHODS, vol. 3, no. 9, 1 September 2023 (2023-09-01), page 100592, XP093263223, ISSN: 2667-2375, DOI: 10.1016/j.crmeth.2023.100592 Retrieved from the Internet: URL:https://pdf.sciencedirectassets.com/779140/1-s2.0-S2667237522X00106/1-s2.0-S2667237523002448/main.pdf?hash=9624a29aa95fe4ae5422e5dd887f3a85c0bda43cad94efac3af2c2f58519d478&host=68042c943591013ac2b2430a89b270f6af2c76d8dfd086a07176afe7c76c2c61&pii=S2667237523002448&tid=spdf-ea2fbf1d-0ee8-4a5c-9589-50b> * the whole document * ----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 27 March 2025 | Kollreider, Klaus |

EPO FORM 1503 03.82 (P04C01)

**EP 4 742 153 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Auto-encoding variational bayes. **D. P. KINGMA** ; **M. WELLING**. 2nd International Conference on Learning Representations, ICLR 2014, Banff, AB, Canada. Conference Track Proceedings, 2014
- Generative Adversarial Nets. **I. GOODFELLOW** ; **J. POUGET-ABADIE** ; **M. MIRZA** ; **B. XU** ; **D. WARDE-FARLEY** ; **S. OZAIR** ; **A. COURVILLE** ; **Y. BENGIO**. Advances in Neural Information Processing Systems. Curran Associates, Inc., 2014, vol. 27
- Improved Denoising Diffusion Probabilistic Models. **A. Q. NICHOL** ; **P. DHARIWAL**. Proceedings of the 38th International Conference on Machine Learning. PMLR, July 2021, 8162-8171
- **D. N. LESMES-LEON** ; **A. DENGEL** ; **S. AHMED**. Generative adversarial networks in cell microscopy for image augmentation. *A systematic review*, August 2023
- **R. SHARMA** ; **M. SAQIB** ; **C. T. LIN** ; **M. BLUMENSTEIN**. A Survey on Object Instance Segmentation. *SN Computer Science*, September 2022, vol. 3 (6), 499
- Learning Generative Models of Tissue Organization with Supervised GANs. **L. HAN** ; **R. F. MURPHY** ; **D. RAMANAN**. IEEE Winter Conference on Applications of Computer Vision. IEEE Winter Conference on Applications of Computer Vision, March 2018, vol. 2018, 682-690
- **P. DIMITRAKOPOULOS** ; **G. SFIKAS** ; **C. NIKOU**. ISING-GAN: Annotated Data Augmentation with a Spatially Constrained Generative Adversarial Network. *2020 IEEE 17th International Symposium on Biomedical Imaging (ISBI)*, April 2020, 1600-1603
- **K. SHAGA DEVAN** ; **P. WALTHER** ; **J. VON EINEM** ; **T. ROPINSKI** ; **H. A. KESTLER** ; **C. READ**. Improved automatic detection of herpesvirus secondary envelopment stages in electron microscopy by augmenting training data with synthetic labelled images generated by a generative adversarial network. *Cellular Microbiology*, 2021, vol. 23 (2), e13280
- **R. ABDAL** ; **P. ZHU** ; **N. J. MITRA** ; **P. WONKA**. Labels4Free: Unsupervised Segmentation Using StyleGAN. *Proceedings of the IEEE/CVF International Conference on Computer Vision*, 2021, 13970-13979
- **A. TOKER** ; **M. EISENBERGER** ; **D. CREMERS** ; **L. LEAL-TAIX6**. *SatSynth: Augmenting Image-Mask Pairs through Diffusion Models for Aerial Semantic Segmentation*, March 2024

- Analyzing and improving the image quality of stylegan. **T. KARRAS** ; **S. LAINE** ; **M. AITTALA** ; **J. HELLSTEN** ; **J. LEHTINEN** ; **T. AILA**. Proceedings of the IEEE/CVF Conference on Computer Vision and Pattern Recognition. IEEE Computer Society, 2020, 8110-8119
- **W. DEE** ; **R. A. IBRAHIM** ; **E. MAROULI**. *Histopathological Domain Adaptation with Generative Adversarial Networks Bridging the Domain Gap Between Thyroid Cancer Histopathology Datasets*, May 2023
- **A. MASCOLINI** ; **D. CARDAMONE** ; **F. PONZIO** ; **S. DI CATALDO** ; **E. FICARRA**. Exploiting generative self-supervised learning for the assessment of biological images with lack of annotations. *BMC Bioinformatics*, July 2022, vol. 23 (1), 295
- **C. EDLUND** ; **T. R. JACKSON** ; **N. KHALID** ; **N. BEVAN** ; **T. DALE** ; **A. DENGEL** ; **S. AHMED** ; **J. TRYGG** ; **R. SJO´GREN**. LIVECell-A large-scale dataset for label-free live cell segmentation. *Nature Methods*, September 2021, vol. 18 (9), 1038-1045
- **N. F. GREENWALD** ; **G. MILLER** ; **E. MOEN** ; **A. KONG** ; **A. KAGEL** ; **T. DOUGHERTY** ; **C. C. FULLAWAY** ; **B. J. MCINTOSH** ; **K. X. LEOW** ; **M. S. SCHWARTZ**. Whole-cell segmentation of tissue images with human-level performance using large-scale data annotation and deep learning. *Nature Biotechnology*, April 2022, vol. 40 (4), 555-565
- **T. LIN** ; **M. MAIRE** ; **S. J. BELONGIE** ; **L. D. BOURDEV** ; **R. B. GIRSHICK** ; **J. HAYS** ; **P. PERONA** ; **D. RAMANAN** ; **P. DOLL'A R** ; **C. L. ZITNICK**. Microsoft COCO: common objects in context. *CoRR*, 2014, vol. 1405.0312
- Rebooting ACGAN: Auxiliary Classifier GANs with Stable Training. **M. KANG** ; **W. SHIM** ; **M. CHO** ; **J. PARK**. Advances in Neural Information Processing Systems. Curran Associates, Inc., 2021, vol. 34, 23 505-23 518
- Conditional Image Synthesis with Auxiliary Classifier GANs. **A. ODENA** ; **C. OLAH** ; **J. SHLENS**. Proceedings of the 34th International Conference on Machine Learning. PMLR, July 2017, 2642-2651

- GANs Trained by a Two Time-Scale Update Rule Converge to a Local Nash Equilibrium. **M. HEUSEL** ; **H. RAMSAUER** ; **T. UNTERTHINER** ; **B. NESSLER** ; **S. HOCHREITER**. Advances in Neural Information Processing Systems. Curran Associates, Inc., 2017, vol. 30
- **C. SZEGEDY** ; **V. VANHOUCKE** ; **S. LOFFE** ; **J. SHLENS** ; **Z. WOJNA**. Rethinking the Inception Architecture for Computer Vision. *2016 IEEE Conference on Computer Vision and Pattern Recognition (CVPR)*, June 2016, 2818-2826
- ImageNet: A large-scale hierarchical image database. **J. DENG** ; **W. DONG** ; **R. SOCHER** ; **L.-J. LI** ; **K. LI** ; **L. FEI-FEI**. 2009 IEEE Conference on Computer Vision and Pattern Recognition. Ieee, June 2009, 248-255
- **A. BORJI**. Pros and cons of GAN evaluation measures. *Computer Vision and Image Understanding*, February 2019, vol. 179, 41-65
- **M. KANG** ; **J. SHIN** ; **J. PARK**. StudioGAN: A Taxonomy and Benchmark of GANs for Image Synthesis. *IEEE Transactions on Pattern Analysis and Machine Intelligence*, December 2023, vol. 45 (12), 15725-15742
- Differentiable Augmentation for Data-Efficient GAN Training. **S. ZHAO** ; **Z. LIU** ; **J. LIN** ; **J.-Y. ZHU** ; **S. HAN**. Advances in Neural Information Processing Systems. Curran Associates, Inc., 2020, vol. 33, 7559-7570
- Training Generative Adversarial Networks with Limited Data. **T. KARRAS** ; **M. AITTALA** ; **J. HELLSTEN** ; **S. LAINE** ; **J. LEHTINEN** ; **T. AILA**. Advances in Neural Information Processing Systems. Curran Associates, Inc., 2020, vol. 33, 12 104-12 114
- Deceive D: Adaptive Pseudo Augmentation for GAN Training with Limited Data. **L. JIANG** ; **B. DAI** ; **W. WU** ; **C. C. LOY**. Advances in Neural Information Processing Systems. Curran Associates, Inc., 2021, vol. 34, 21 655-21 667
- **M. WIATRAK** ; **S. V. ALBRECHT** ; **A. NYSTROM**. *Stabilizing Generative Adversarial Networks: A Survey*, March 2020
- **TERO KARRAS** ; **SAMULI LAINE** ; **TIMO AILA**. A style-based generator architecture for generative adversarial networks. *In Proc. CVPR*, 2018
- **KARRAS, TERO** ; **AILA, TIMO** ; **LAINE, SAMULI** ; **LEHTINEN, JAAKKO**. Progressive Growing of GANs for Improved Quality, Stability, and Variation. *arXiv:1710.10196*, 01 October 2017
- A Style-Based Generator Architecture for Generative Adversarial Networks. **KARRAS, TERO** ; **LAINE, SAMULI** ; **AILA, TIMO**. 2019 IEEE/CVF Conference on Computer Vision and Pattern Recognition (CVPR). IEEE., June 2019, 4396-4405
- **TERO KARRAS** ; **MIIKA AITTALA** ; **SAMULI LAINE** ; **ERIK HÄRKÖNEN** ; **JANNE HELLSTEN** ; **JAAKKO LEHTINEN** ; **TIMO AILA**. Alias-Free Generative Adversarial Networks. *arXiv:2106.12423v4*, 23 June 2021
- **ZARGARI, ABOLFAZL et al.** Enhanced cell segmentation with limited training datasets using cycle generative adversarial networks. *iScience*, vol. 27 (5), 109740
- Demystifying MMD gans. **BINKOWSKI, M.** ; **SUTHERLAND, D. J.** ; **ARBEL, M.** ; **GRETTON, A.** 6th International Conference on Learning Representations, ICLR 2018. Conference Track Proceedings, 2018
- **HO J** ; **JAIN A.** ; **ABBEEL P.** Denoising Diffusion Probabilistic Models. *arXiv:2006.11239v2*, 16 December 2020
- **ANAAM et al.** Studying the Applicability of Generative Adversarial Networks on HEp-2 Cell Image Augmentation. *IEEE Access*, 2021, vol. 9, 98048-98059